(19) Europäisches Patentamt / European Patent Office / Office européen des brevets

(11) **EP 3 604 620 A1**

(12) **EUROPEAN PATENT APPLICATION**
published in accordance with Art. 153(4) EPC

(43) Date of publication:
**05.02.2020 Bulletin 2020/06**

(21) Application number: **18775253.0**

(22) Date of filing: **30.03.2018**

(51) Int Cl.:
**C25B 15/08** (2006.01)          **C25B 1/08** (2006.01)
**C25B 9/00** (2006.01)          **C25B 15/02** (2006.01)

(86) International application number:
**PCT/JP2018/013955**

(87) International publication number:
**WO 2018/182005 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017   JP 2017072931**
                     **31.03.2017   JP 2017072918**
                     **31.03.2017   JP 2017072968**

(71) Applicant: **Asahi Kasei Kabushiki Kaisha**
**Tokyo 100-0006 (JP)**

(72) Inventors:
• **HASEGAWA Shinji**
  **Tokyo 100-0006 (JP)**
• **YUKAWA Takeshi**
  **Tokyo 100-0006 (JP)**
• **KOSEKI Takayoshi**
  **Tokyo 100-0006 (JP)**
• **KOMURA Ryo**
  **Tokyo 100-0006 (JP)**
• **UCHINO Yousuke**
  **Tokyo 100-0006 (JP)**
• **OKAYAMA Naoki**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **WATER ELECTROLYSIS SYSTEM, WATER ELECTROLYSIS METHOD, AND METHOD FOR PRODUCING HYDROGEN**

(57)     Provided are a water electrolysis system, a water electrolysis method, and a hydrogen production method, a feature of which is that in an alkaline water electrolysis system including at least an electrolyzer and a gas-liquid separation tank, an inflow port by which a mixture of gas and electrolyte flows into the gas-liquid separation tank from the electrolyzer is disposed at a higher position than the liquid surface of electrolyte inside the gas-liquid separation tank.

*FIG. 3A*

**(Cont. next page)**

# FIG. 3B

( i )

72

72i

A

72in

( ii )

72i

72in

72

A

(iii)

72i

72

θ

A

72in

**Description**

TECHNICAL FIELD

The present disclosure relates to a water electrolysis system, a water electrolysis method, and a hydrogen production method.

BACKGROUND

In recent years, techniques utilizing renewable energy, such as wind power generation and solar power generation, have attracted attention in order to address issues including global warming due to greenhouse gases such as carbon dioxide, decreasing fossil fuel reserves, and so on.

The nature of renewable energy is that it is subject to very large fluctuation as its output depends on climatic conditions. It is thus not always possible to transport electric power obtained through electricity generation by renewable energy to the general electric power system, and there is concern about social influences such as imbalance of electricity supply and demand, electric power system destabilization, and so on.

Therefore, research is being conducted in relation to converting electric power generated from renewable energy into a form suitable for storage and transportation, and then utilizing the electric power in this form. Specifically, studies have been made on how to generate storable and transportable hydrogen by electrolysis of water using electric power generated from renewable energy, and to use hydrogen as an energy source or material.

Hydrogen is widely used industrially in the fields of, for example, petroleum refining, chemical synthesis, and metal refining, and in recent years the potential for use in hydrogen stations for fuel cell vehicles (FCVs), smart communities, hydrogen power plants, and so forth has been expanding. Accordingly, there is high expectation for the development of technology for obtaining hydrogen, in particular, from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, capability for large-scale implementation, and inexpensiveness as compared to other water electrolysis systems.

However, in order to adopt alkaline water electrolysis as a means for storing and transporting energy in the future, it is necessary to enable efficient and stable water electrolysis using electric power with large fluctuation in output as described above, and various issues associated with systems for alkaline water electrolysis need to be resolved.

A known alkaline water electrolysis system circulates electrolyte using a pump during alkaline water electrolysis (refer to Patent Literature (PTL) 1).

It is essential that a gas supply environment having high safety and reliability is constructed in an alkaline water electrolysis system in order to ensure continuous operation in a stable manner. In terms of means for achieving this, a water sealer cuts off air present outside the system and water present inside the system and, for this reason, is typically used to provide an efficient gas supply environment having particularly high reliability (PTL 2).

CITATION LIST

Patent Literature

PTL 1: JP 2013-028822 A
PTL 2: JP 2014-223590 A

SUMMARY

(Technical Problem)

Despite storage tanks such as tanks for gas-liquid separation and tanks for electrode solution being essential components in systems adopted for alkaline water electrolysis, sufficient consideration has not been given thereto, and problems such as tank degradation arise depending on the type of electrolyte that is used.

It is of course desirable that an alkaline water electrolysis system continuously maintains stable performance. For this reason, it is desirable to structure the system such that degradation or the like of tanks such as a tank for storing electrolyte and a tank for performing gas-liquid separation does not occur and such that a tank serving as a gas-liquid separation tank displays the highest possible gas-liquid separation performance.

Therefore, a first issue to which the present disclosure relates is the significant improvement of gas-liquid separation performance in a gas-liquid separation tank of an alkaline water electrolysis system.

Moreover, when a pump is used to circulate electrolyte, there are cases in which electric power efficiency decreases due to electric power being used as a power supply for the pump and/or in which gas purity deteriorates at low current density under a variable power supply if the amount of electrolyte circulated by the pump is constant.

Therefore, a second issue to which the present disclosure relates is the provision of an alkaline water electrolysis system that is not susceptible to reduction of electric power efficiency and that provides excellent gas purity under low current density conditions.

However, since a water sealer requires constant filling with a certain volume of water, water production equipment and water volume management are required for the water sealer. This causes problems such as necessitating complicated management for the alkaline water electrolysis system as a whole and an extremely high burden in terms of equipment so as to enable separate management of the amount of circulated liquid and alkali concentration in an alkaline water electrolyzer. Although the use of a water sealer in electrolysis is known, studies that consider efficiency of an electrolysis system as a whole have not been carried out.

Moreover, there is also an issue that a mist component that condenses and accumulates in a flame arrester may block gas piping, which inhibits control of differential pressure of the oxygen side and the hydrogen side and may increase the pressure inside the water sealer, lower the liquid surface height inside the water sealer, and lower the water sealing level, meaning that an operation of discharging condensed water from the system has been necessary. For this reason, there has been an issue that management of the amount of circulated liquid and alkali concentration is complicated as previously described.

Therefore, a third issue to which the present disclosure relates is the enhancement of efficiency of an alkaline water electrolysis system as a whole in a case in which a water sealer is used.

(Solution to Problem)

The inventors carried out studies directed toward resolving the issues described above by focusing on the configuration by which electrolyte and gas flow into a gas-liquid separation tank. Through their studies, the inventors made improvements to the gas-liquid separation performance of a gas-liquid separation tank through the solution set forth below.

The primary features of the present disclosure are as follows.

[1] A water electrolysis system comprising at least an electrolyzer and a gas-liquid separation tank, wherein an inflow port by which a mixture of gas and electrolyte flows into the gas-liquid separation tank from the electrolyzer is disposed at a higher position than a liquid surface of electrolyte in the gas-liquid separation tank.

[2] An alkaline water electrolysis system comprising at least an electrolyzer and a gas-liquid separation tank, wherein an inflow port by which a mixture of gas and electrolyte flows into the gas-liquid separation tank from the electrolyzer is disposed at a higher position than a liquid surface of electrolyte in the gas-liquid separation tank.

[3] The water electrolysis system according to the foregoing [1] or [2], wherein piping attached to the inflow port is disposed along an inner wall of the gas-liquid separation tank.

[4] The water electrolysis system according to any one of the foregoing [1] to [3], wherein the electrolyzer and a header that is a pipe that distributes or collects electrolyte are separate, and the header is disposed at a lower part and/or upper part inside a partition wall of the electrolyzer and/or outside an outer frame of the electrolyzer, and is disposed such as to extend in a direction perpendicular to the partition wall.

[5] The water electrolysis system according to any one of the foregoing [1] to [4], wherein the electrolyzer and a header that is a pipe that distributes or collects electrolyte are unified, and the header is disposed at a lower part and/or upper part inside a partition wall of the electrolyzer and/or inside an outer frame of the electrolyzer, and is disposed such as to extend in a direction perpendicular to the partition wall.

[6] The water electrolysis system according to any one of the foregoing [1] to [5], wherein a resin lining layer is included at an inner surface of the gas-liquid separation tank, and the resin lining layer has a thickness of 0.5 mm to 4.0 mm.

[7] The water electrolysis system according to the foregoing [6], wherein standard deviation of the thickness of the resin lining layer is 1.0 mm or less.

[8] The water electrolysis system according to the foregoing [6] or [7], wherein the resin lining layer is a fluororesin.

[9] The water electrolysis system according to the foregoing [8], wherein the fluororesin is at least one selected from the group consisting of polytetrafluoroethylene (PTFE), tetrafluoroethylene-perfluoroalkyl vinyl ether copolymer (PFA), tetrafluoroethylene-hexafluoropropylene copolymer (FEP), and tetrafluoroethylene-ethylene copolymer (ETFE).

[10] The water electrolysis system according to any one of the foregoing [6] to [9], wherein the resin lining layer is two or more layers.

[11] The water electrolysis system according to any one of the foregoing [1] to [10], wherein an outer surface of the gas-liquid separation tank is covered by a heat insulating material.

[12] The water electrolysis system according to any one of the foregoing [1] to [10], further comprising a confluence pipe connected to a hydrogen separation tank that separates electrolyte and hydrogen gas and an oxygen separation tank that separates electrolyte and oxygen gas.

[13] A water electrolysis method comprising using the water electrolysis system according to any one of the foregoing [1] to [12] at a current density of 8 kA/m$^2$ or more under a power supply for which current density varies over time and at an electrolysis temperature of 80°C or higher.

[14] A hydrogen production method for producing hydrogen through water electrolysis of water containing an alkali using a system including an electrolyzer, comprising causing a mixture of gas and electrolyte to flow into a gas-liquid separation tank from the electrolyzer at a higher position than a liquid surface of electrolyte in the gas-liquid separation tank.

[15] The water electrolysis system according to the foregoing [1], wherein

when h (units: m) is taken to be vertical direction distance between the liquid surface of electrolyte in the gas-liquid separation tank and a highest vertical direction position of electrolyte returning piping that feeds electrolyte from the electrolyzer to the gas-liquid separation tank, and

when H (units: m) is taken to be vertical direction distance between a lowest vertical direction position of an electrolyte distribution pipe inlet of the electrolyzer and the liquid surface of electrolyte in the gas-liquid separation tank, a relationship shown below is satisfied,

$$0.01 \times H \leq h \leq 0.5 \times H$$

the highest vertical direction position of the electrolyte returning piping is further vertically upward than the liquid surface of electrolyte in the gas-liquid separation tank, and the lowest vertical direction position of the electrolyte distribution pipe inlet is further vertically downward than the liquid surface of electrolyte in the gas-liquid separation tank.

[16] The water electrolysis system according to the foregoing [15], wherein the bipolar electrolyzer and the gas-liquid separation tank are disposed separately from one another.

[17] The water electrolysis system according to the foregoing [15] or [16], wherein

the gas-liquid separation tank includes an oxygen separation tank and a hydrogen separation tank, and

when ha is taken to be vertical direction distance between a liquid surface of electrolyte in the oxygen separation tank and a highest vertical direction position of anode electrolyte returning piping that feeds electrolyte from the electrolyzer to the oxygen separation tank, and

when hc is taken to be vertical direction distance between a liquid surface of electrolyte in the hydrogen separation tank and a highest vertical direction position of cathode electrolyte returning piping that feeds electrolyte from the electrolyzer to the hydrogen separation tank, a relationship shown below is satisfied,

$$ha \leq hc.$$

[18] The water electrolysis system according to any one of the foregoing [15] to [17], wherein

the gas-liquid separation tank includes an oxygen separation tank and a hydrogen separation tank, and

electrolyte discharged from the oxygen separation tank and electrolyte discharged from the hydrogen separation tank are mixed and fed to the electrolyzer.

[19] The water electrolysis system according to any one of the foregoing [15] to [18], further comprising a power supply for which current density varies over time.

[20] The water electrolysis system according to any one of the foregoing [15] to [19], wherein the electrolyzer and a header that is a pipe that distributes electrolyte to or collects electrolyte from the electrolyzer are unified, and the header is disposed at a lower part inside a partition wall of the electrolyzer and/or inside an outer frame of the electrolyzer, and is disposed such as to extend in a direction perpendicular to the partition wall.

[21] The water electrolysis system according to any one of the foregoing [15] to [20], wherein

the electrolyzer includes an anode compartment and a cathode compartment, and

a membrane separating the anode compartment and the cathode compartment is a polysulfone membrane.

[22] The water electrolysis system according to the foregoing [1], further comprising at least a water sealer and a water replenisher, wherein

the water sealer is connected downstream of the gas-liquid separation tank and upstream of the water replenisher.

[23] The water electrolysis system according to the foregoing [22], further comprising a mechanism that adjusts an amount of water in the water electrolysis system as a whole.

[24] The water electrolysis system according to the foregoing [22] or [23], wherein

the gas-liquid separation tank includes an oxygen separation tank and a hydrogen separation tank, and

the water electrolysis system further comprises a confluence pipe connected to the oxygen separation tank and the hydrogen separation tank.

[25] The water electrolysis system according to any one of the foregoing [22] to [24], wherein the water sealer is connected downstream of an oxygen separation tank and/or downstream of a hydrogen separation tank.

[26] The water electrolysis system according to any one of the foregoing [22] to [25], further comprising a buffer tank connected downstream of the water sealer.

[27] The water electrolysis system according to any one of the foregoing [22] to [26], further comprising piping that is connected downstream of the water sealer and that externally discharges hydrogen gas and/or oxygen gas, wherein a flame arrester is included in the piping.

[28] The water electrolysis system according to any one of the foregoing [22] to [27], further comprising, in the piping, a mechanism for returning mist-condensation liquid of the flame arrester to the water sealer.

[29] The water electrolysis system according to the foregoing [27] or [28], wherein the flame arrester is disposed with a gas passing direction thereof oriented in a horizontal direction or a downward vertical direction.

[30] A water electrolysis method using the water electrolysis system according to any one of the foregoing [22] to [29], comprising supplying water from the water replenisher via the water sealer.

[31] The water electrolysis method according to the foregoing [30], wherein electrolyte discharged from the oxygen separation tank and electrolyte discharged from the hydrogen separation tank are mixed in the confluence pipe and are introduced into the electrolyzer.

[32] The water electrolysis method according to the foregoing [30] or [31], wherein water discharged from the water sealer is supplied to the electrolyzer via the buffer tank.

[33] The water electrolysis method according to any one of the foregoing [30] to [32], wherein mist that condenses in the flame arrester is returned to the water sealer.

[34] The water electrolysis system according to the foregoing [1], comprising at least an electrolyzer, a gas-liquid separation tank, and a water replenisher, wherein

the water electrolysis system further comprises piping that externally discharges hydrogen gas and/or oxygen gas, and

a flame arrester is included in the piping.

(Advantageous Effect)

According to a first embodiment of the present disclosure, it is possible to significantly improve gas-liquid separation performance in a gas-liquid separation tank of an alkaline water electrolysis system.

An alkaline water electrolysis system according to a second embodiment of the present disclosure is not susceptible to reduction of electric power efficiency and provides excellent gas purity under low current conditions as a result of having the configuration set forth above.

According to a third embodiment of the present disclosure, it is possible to enhance the efficiency of an alkaline water electrolysis system as a whole in a case in which a water sealer is used.

BRIEF DESCRIPTION OF THE DRAWINGS

In the accompanying drawings:

FIG. 1 generally illustrates an alkaline water electrolysis system according to an example of a present embodiment;

FIG. 2 is a side view illustrating the entirety of an example of an electrolyzer in an alkaline water electrolysis system according to an example of a present embodiment;

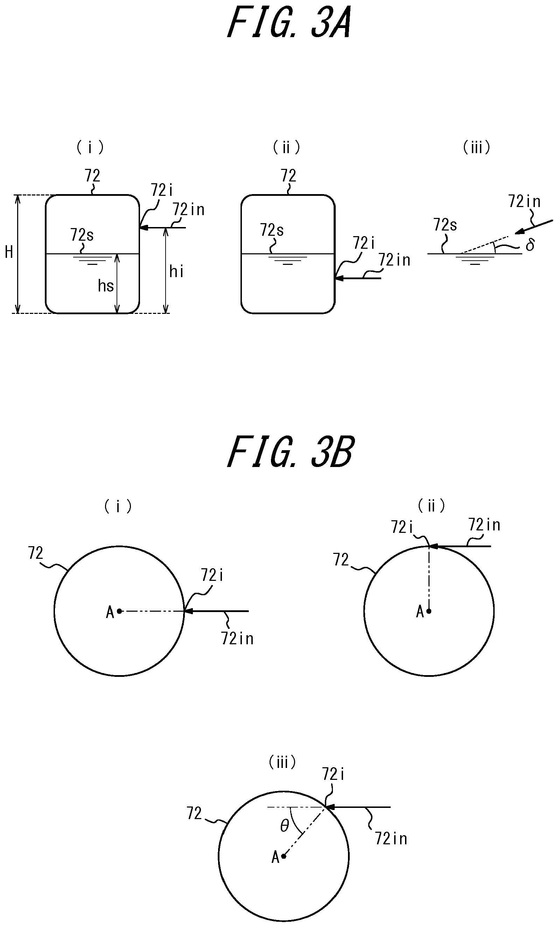

FIG. 3 illustrates a circular tube-shaped gas-liquid separation tank in an alkaline water electrolysis system according to an example of a present embodiment, wherein (A) is a cross-sectional view for a plane along an axial direction of a gas-liquid separation tank in which: (i) is a diagram relating to a gas-liquid separation tank in an alkaline water electrolysis system according to an example of a present embodiment; (ii) is a diagram relating to a gas-liquid separation tank in an alkaline water electrolysis system according to a comparative example; and (iii) is a diagram for explanation of an angle $\delta$, and (B) is a cross-sectional view for a plane perpendicular to an axial direction of a gas-liquid separation tank in which: (i) is a diagram relating to a gas-liquid separation tank in an alkaline water electrolysis system according to an example of a present embodiment; (ii) is a diagram relating to a gas-liquid separation tank in an alkaline water electrolysis system according to an example of the present disclosure; and (iii) is a diagram for explanation of an angle θ;

FIG. 4 is a plan view illustrating an example of an electrolyzer in an internal header-type alkaline water electrolysis system according to an example of a present embodiment;

FIG. 5 illustrates part of a cross-section obtained when the electrolyzer of the internal header-type alkaline water electrolysis system illustrated in FIG. 4 is cut by a plane along a line A-A indicated in FIG. 4;

FIG. 6 is a plan view illustrating an electrolyzer of an external header-type alkaline water electrolysis system according to an example of a present embodiment;

FIG. 7 illustrates part of a cross-section obtained when the electrolyzer of the external header-type alkaline water electrolysis system illustrated in FIG. 6 is cut by a plane along a line B-B indicated in FIG. 6;

FIG. 8 is a schematic view illustrating an example of an alkaline water electrolysis system according to a present embodiment; and

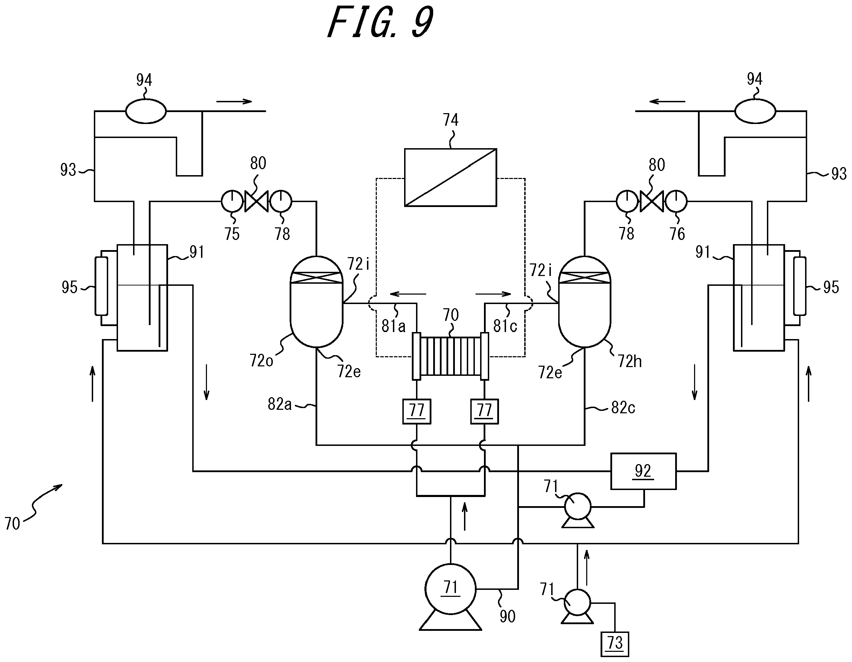

FIG. 9 generally illustrates an alkaline water electrolysis system according to an example of a present embodiment.

## DETAILED DESCRIPTION

The following provides a detailed description of embodiments of the present disclosure (hereinafter, referred to as "present embodiments"). However, the present disclosure is not limited to the following embodiments and may be implemented with various alterations that are within the essential scope thereof.

A first embodiment for resolving the first issue to which the present disclosure relates is described below.

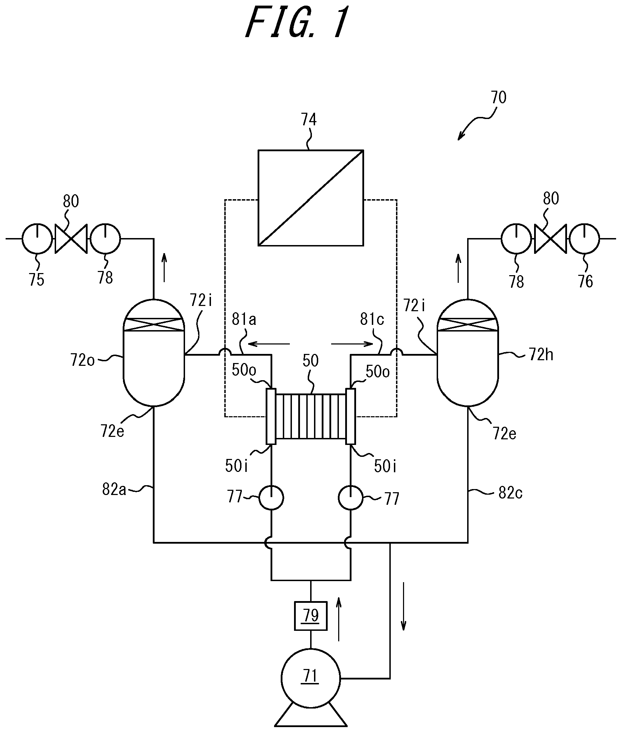

FIG. 1 generally illustrates an alkaline water electrolysis system according to an example of the present embodiment.

(Alkaline water electrolysis system)

An alkaline water electrolysis system 70 according to the present embodiment includes at least an electrolyzer 50 and a gas-liquid separation tank 72, wherein an inflow port 72i by which a mixture of gas and electrolyte flows into the gas-liquid separation tank 72 from the electrolyzer 50 is disposed at a higher position than the liquid surface of electrolyte in the gas-liquid separation tank 72.

In the alkaline water electrolysis system 70 according to the present embodiment, piping 72in attached to the inflow port 72i is disposed along an inner wall of the gas-liquid separation tank 72.

As described further below, an internal header 10I configuration or an external header 10O configuration may be adopted in the alkaline water electrolysis system 70 according to the present embodiment.

Specifically, in the alkaline water electrolysis system 70 according to the present embodiment, the electrolyzer 50 and a header 10 that is a pipe that distributes or collects electrolyte may be separate, and the header 10 may be disposed at a lower part and/or upper part inside a partition wall 1 of the electrolyzer 50 and/or outside an outer frame 3 of the electrolyzer 50, and may be disposed such as to extend in a direction perpendicular to the partition wall 1.

Alternatively, the electrolyzer 50 and a header 10 that is a pipe that distributes or collects electrolyte may be unified, and the header 10 may be disposed at a lower part and/or upper part inside a partition wall 1 of the electrolyzer 50 and/or inside an outer frame 3 of the electrolyzer 50, and may be disposed such as to extend in a direction perpendicular to the partition wall 1.

On the other hand, a resin lining layer (not illustrated) is included at an inner surface of the gas-liquid separation tank 72 in the alkaline water electrolysis system 70 according to the present embodiment.

In the present embodiment, the thickness of the resin lining layer is preferably 0.5 mm to 4.0 mm. Moreover, the standard deviation of the thickness of the resin lining layer is preferably 1.0 mm or less. Further, the resin lining layer is preferably a fluororesin. The fluororesin is preferably at least one selected from the group consisting of polytetrafluoroethylene (PTFE), tetrafluoroethylene-perfluoroalkyl vinyl ether copolymer (PFA), tetrafluoroethylene-hexafluoropropylene copolymer (FEP), and tetrafluoroethylene-ethylene copolymer (ETFE).

In the present embodiment, the resin lining layer is preferably two or more layers.

It is also preferable that an outer surface of the gas-liquid separation tank 72 is covered by a heat insulating material (not illustrated) in the present embodiment.

The alkaline water electrolysis system 70 according to the present embodiment further includes a confluence pipe that is connected to a hydrogen separation tank 72h that separates electrolyte and hydrogen gas and an oxygen separation tank 72o that separates electrolyte and oxygen gas.

Through the alkaline water electrolysis system 70 according to the present embodiment, gas-liquid separation performance in a gas-liquid separation tank 72 can be significantly improved.

First, components of the alkaline water electrolysis system 70 according to the present embodiment are described.

((Electrolyzer))

The electrolyzer 50 in the alkaline water electrolysis system 70 according to the present embodiment is not particularly limited and may be a monopolar electrolyzer or a bipolar electrolyzer, though a bipolar electrolyzer is industrially preferable.

The bipolar method is one method of connecting a large number of cells to a power supply and is a method in which a plurality of bipolar elements 60 having an anode 2a as one surface thereof and a cathode 2c as one surface thereof are arranged in the same orientation and connected in series, and then only both ends thereof are connected to a power supply.

A bipolar electrolyzer 50 has a feature of enabling a small power supply current and can be used to produce a large quantity of a compound, specific substance, or the like through electrolysis in a short time. Since power supply equipment having fixed current and high voltage is cheaper and more compact when power supply equipment having the same power is compared, the bipolar method is more preferable than the monopolar method from an industrial viewpoint.

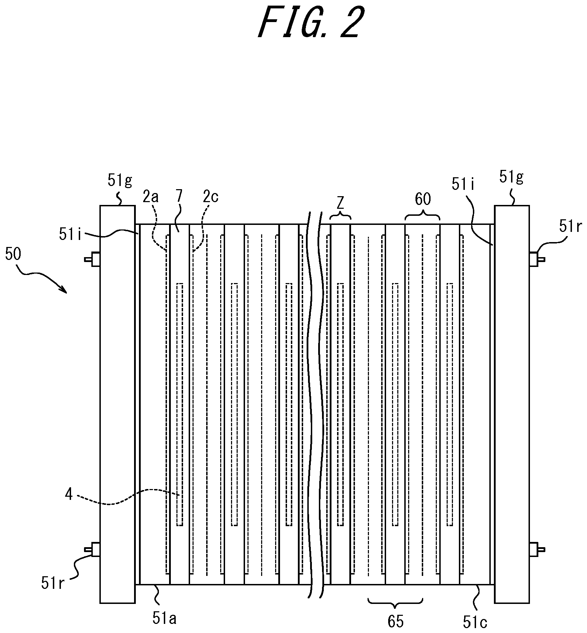

FIG. 2 is a side view illustrating the entirety of an example of the electrolyzer in the alkaline water electrolysis system according to the present embodiment.

As illustrated in FIG. 2, the bipolar electrolyzer 50 in the alkaline water electrolysis system 70 according to the present embodiment has a configuration in which a plurality of bipolar elements 60, each including: an anode 2a; a cathode 2c; a partition wall 1 separating the anode 2a and the cathode 2c; and an outer frame 3 bordering the partition wall 1, are stacked with membranes 4 interposed therebetween.

((Bipolar elements))

In one example, the bipolar elements 60 used in the bipolar electrolyzer 50 of the alkaline water electrolysis system 70 each include a partition wall 1 separating an anode 2a and a cathode 2c, and also include an outer frame 3 bordering the partition wall 1 as illustrated in FIG. 2. More specifically, the partition wall 1 is conductive and the outer frame 3 runs along the periphery of the partition wall 1 such as to border the partition wall 1.

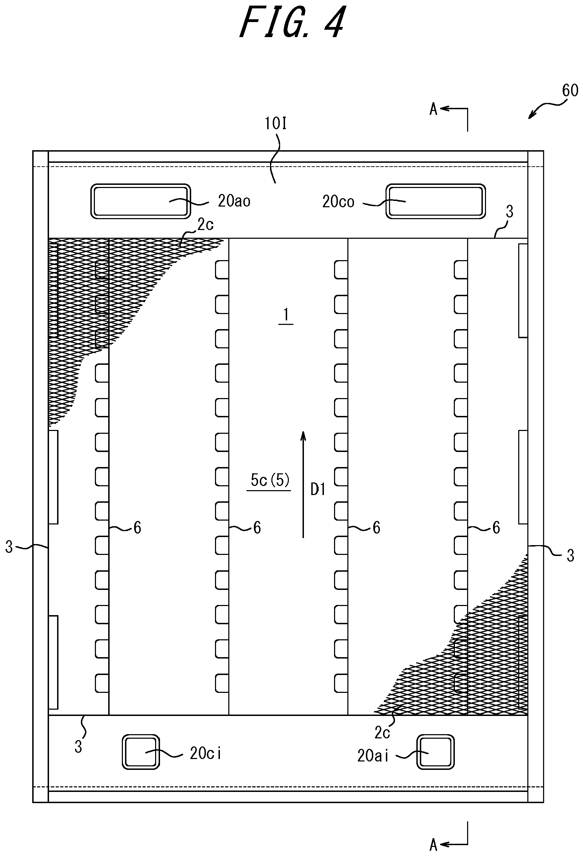

In the present embodiment, each bipolar element 60 may typically be used such that a given direction D1 along the partition wall 1 corresponds to a vertical direction. Specifically, in a case in which the partition wall 1 has a rectangular shape in plan view as illustrated in FIGS. 4 to 7, the bipolar element 60 may be used such that a given direction D1 along the partition wall 1 is the same as a direction of one pair of facing edges among the two pairs of facing edges thereof (refer to FIGS. 4 to 7). In the present description, the aforementioned vertical direction is also referred to as the electrolyte passing direction.

In the present embodiment, the bipolar electrolyzer 50 is constructed by stacking the required number of bipolar elements 60 as illustrated in FIG. 2.

In the example illustrated in FIG. 2, the bipolar electrolyzer 50 includes, from one end thereof, a fast head 51g, an insulating plate 51i, and an anode terminal element 51a that are arranged in order, and further includes an anode-side gasket portion 7, a membrane 4, a cathode-side gasket portion 7, and a bipolar element 60 that are arranged in this order. In this case, the bipolar element 60 is arranged such that the cathode 2c thereof faces toward the anode terminal element 51a. Components from the anode-side gasket portion 7 up to the bipolar element 60 are repeatedly arranged as many times as required for the designed production quantity. After components from the anode-side gasket portion 7 up to the bipolar element 60 have been repeatedly arranged the required number of times, an anode-side gasket portion 7, a membrane 4, and a cathode-side gasket portion 7 are arranged again, and finally a cathode terminal element 51c, an insulating plate 51i, and a loose head 51g are arranged in this order. All of these components are unified to obtain the bipolar electrolyzer 50 through tightening using a tightening mechanism such as a tie rod mechanism 51r (refer to FIG. 2) or a hydraulic cylinder mechanism.

The arrangement of the bipolar electrolyzer 50 can be arbitrarily selected from either the anode 2a side or the cathode 2c side and is not limited to the order set forth above.

In the bipolar electrolyzer 50, the bipolar elements 60 are arranged between the anode terminal element 51a and the cathode terminal element 51c as illustrated in FIG. 2. Membranes 4 are arranged between the anode terminal element 51a and a bipolar element 60, between bipolar elements 60 arranged adjacent to each other, and between a bipolar element 60 and the cathode terminal element 51c, respectively.

In the bipolar electrolyzer 50 according to the present embodiment, the partition walls 1, outer frames 3, and membranes 4 define electrode compartments 5 through which electrolyte passes as illustrated in FIGS. 4 to 7.

In particular, in the bipolar electrolyzer 50 according to the present embodiment, a section between the partition walls 1 of two bipolar elements 60 that are adjacent and a section between the partition walls 1 of a bipolar element 60 and a terminal element that are adjacent are each referred to as an electrolytic cell 65. Each electrolytic cell 65 includes: a partition wall 1, an anode compartment 5a, and an anode 2a of one element; a membrane 4; and a cathode 2c, a cathode compartment 5c, and a partition wall 1 of the other element.

In more detail, each electrode compartment 5 has an electrolyte inlet 5i for introducing electrolyte into the electrode compartment 5 and an electrolyte outlet 5o for drawing electrolyte out of the electrode compartment 5 at the boundary with the outer frame 3. More specifically, each anode compartment 5a includes an anode electrolyte inlet 5ai for introducing electrolyte into the anode compartment 5a and an anode electrolyte outlet 5ao for drawing electrolyte out of the anode compartment 5a. Likewise, each cathode compartment 5c includes a cathode electrolyte inlet 5ci for introducing electrolyte into the cathode compartment 5c and a cathode electrolyte outlet 5co for drawing electrolyte out of the cathode compartment 5c (refer to FIGS. 4 to 7).

In the present embodiment, an internal distributor for uniformly distributing electrolyte over the electrode surface inside the electrolyzer 50 may be included in the anode compartment 5a and the cathode compartment 5c. Moreover, each of the electrode compartments 5 may include a baffle plate having a function of limiting flow of liquid inside the electrolyzer 50. Further, protrusions that create a Karman vortex may be included in the anode compartment 5a and the cathode compartment 5c in order to achieve more uniform electrolyte concentration and temperature inside the electrolyzer 50 and to promote degassing of gas adhering to an electrode 2 or membrane 4.

A header 10 that is a pipe that distributes or collects electrolyte is normally attached to the bipolar electrolyzer 50. The header 10 includes an anode inlet header 10ai by which electrolyte enters an anode compartment 5a and a cathode inlet header IOci by which electrolyte enters a cathode compartment 5c at a lower part of the outer frame 3 disposed at the periphery of the partition wall 1. Likewise, the header 10 includes an anode outlet header 10ao by which electrolyte leaves the anode compartment 5a and a cathode outlet header 10co by which electrolyte leaves the cathode compartment 5c at an upper part of the outer frame 3 disposed at the periphery of the partition wall 1.

Representative examples of the form of arrangement of the header 10 attached to the bipolar electrolyzer 50 illustrated in FIGS. 1 to 7 are an internal header 101 type and an external header 10O type. Either type may be adopted in the present disclosure without any particular limitations.

FIG. 4 is a plan view illustrating an example of an electrolyzer in an internal header-type alkaline water electrolysis system according to an example of the present embodiment.

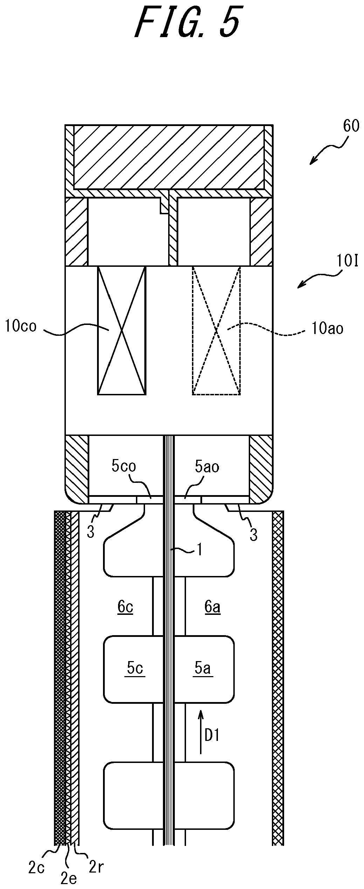

FIG. 5 illustrates part of a cross-section obtained when the electrolyzer of the internal header-type alkaline water electrolysis system illustrated in FIG. 4 is cut by a plane along a line A-A indicated in FIG. 4.

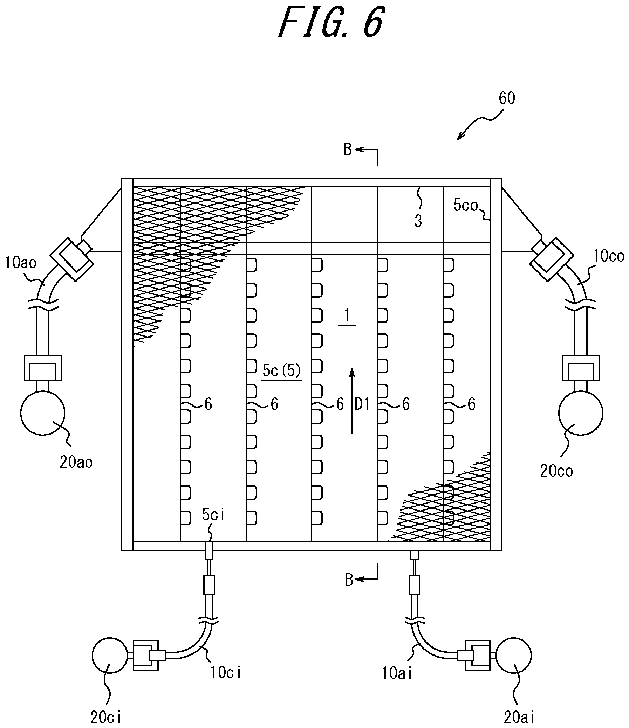

FIG. 6 is a plan view illustrating an electrolyzer in an external header-type alkaline water electrolysis system according to an example of the present embodiment.

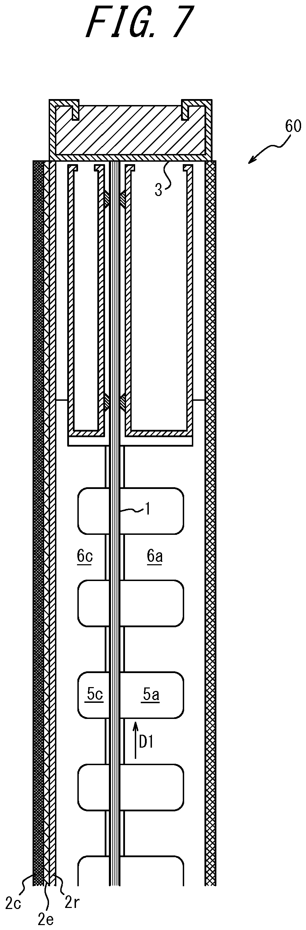

FIG. 7 illustrates part of a cross-section obtained when the electrolyzer of the external header-type alkaline water electrolysis system illustrated in FIG. 6 is cut by a plane along a line B-B indicated in FIG. 6.

In the example illustrated in FIGS. 4 and 5, a conduit 20 that is a pipe for distribution to a header 10 or for collecting gas and electrolyte that are collected in a header 10 is attached to each of the headers 10. Specifically, the conduit 20 includes a distribution pipe that is in communication with an inlet header and a collection pipe that is in communication with an outlet header.

In one example, an anode distribution pipe 20Iai that is in communication with an anode inlet header 10Iai and a cathode distribution pipe 20Ici that is in communication with a cathode inlet header 10Ici are included at a lower part of the outer frame 3, whereas an anode collection pipe 20Iao that is in communication with an anode outlet header 10Iao and a cathode collection pipe 20Ico that is in communication with a cathode outlet header 10Ico are included at an upper part of the outer frame 3.

Normally, one each of the anode inlet header 10Iai, the cathode inlet header 10Ici, the anode outlet header 10Iao, and the cathode outlet header 10Ico are provided for each of the electrode compartments 5 as illustrated in FIGS. 4 and 5. However, this is not a limitation in the present embodiment and a plurality of each thereof may be provided for each of the electrode compartments 5.

Moreover, in general, the anode distribution pipe 20Iai may be in communication with all of the anode inlet headers 10Iai, the cathode distribution pipe 20Ici may be in communication with all of the cathode inlet headers 10Ici, the anode collection pipe 20Iao may be in communication with all of the anode outlet headers 10Iao, and the cathode collection pipe 20Ico may be in communication with all of the cathode outlet headers 10Ico as illustrated in FIGS. 4 and 5.

Although no particular limitations are placed on the extension direction of each header 10 in the present embodiment, it is preferable that an inlet header (anode inlet header 10Iai, cathode inlet header 10Ici) and an outlet header (anode outlet header 10Iao, cathode outlet header 10Ico) each extend in parallel to the given direction D1 along the partition wall 1, and more preferable that all headers 10 extend in parallel to the given direction D1 along the partition wall 1 as in the example illustrated in FIGS. 4 and 5 from a viewpoint of more easily obtaining the effects disclosed herein.

Note that the phrase "extend in parallel to the given direction D1 along the partition wall 1" does not mean in the same direction as the given direction D1 along the partition wall 1 in a strict sense and is inclusive of a case in which a header extends in a direction inclined within a range of 10 degrees or less, for example, relative to the given direction D1 along the partition wall 1. Note that this angle of inclination is preferably 5 degrees or less, and more preferably 2 degrees or less.

Although no particular limitations are placed on the extension direction of each conduit 20 in the present embodiment, it is preferable that a distribution pipe (anode distribution pipe 20Iai, cathode distribution pipe 20Ici) and a collection pipe (anode collection pipe 20Iao, cathode collection pipe 20Ico) each extend in a direction perpendicular to the partition wall 1, and more preferable that all conduits 20 extend in a direction perpendicular to the partition wall 1 as in the example illustrated in FIGS. 4 and 5 from a viewpoint of more easily obtaining the effects disclosed herein.

Note that the phrase "extend in a direction perpendicular to the partition wall 1" does not mean a direction perpendicular to the partition wall 1 in a strict sense and is inclusive of a case in which a conduit extends in a direction inclined within a range of 45 degrees or less viewed in a direction along the partition wall 1, for example, relative to a direction perpendicular to the partition wall 1. Note that this angle of inclination is preferably 30 degrees or less, and more preferably 15 degrees or less.

In the example illustrated in FIGS. 6 and 7, a conduit 20 that is a pipe for distribution to a header 10 or for collecting gas and electrolyte collected in a header 10 is attached to each of the headers 10. More specifically, the conduit 20 includes a distribution pipe that is in communication with an inlet header and a collection pipe that is in communication with an outlet header.

In one example, an anode distribution pipe 200ai that is in communication with an anode inlet header 100ai and a cathode distribution pipe 20Oci that is in communication with a cathode inlet header 10Oci are included at a lower part of the outer frame 3, whereas an anode collection pipe 20Oao that is in communication with an anode outlet header 10Oao and a cathode collection pipe 20Oco that is in communication with a cathode outlet header 10Oco are included at a side part of the outer frame 3.

Normally, one each of the anode inlet header 10Oai, the cathode inlet header 10Oci, the anode outlet header 10Oao, and the cathode outlet header 10Oco are provided for each of the electrode compartments 5 as illustrated in FIGS. 6 and 7. However, this is not a limitation in the present embodiment and a plurality of each of these components may be provided for each of the electrode compartments 5.

Moreover, one each of the anode distribution pipe 20Oai, the cathode distribution pipe 20Oci, the anode collection pipe 20Oao, and the cathode collection pipe 20Oco are normally provided for each of the electrode compartments 5. However, this is not a limitation in the present embodiment and each of these components may be shared by a plurality of electrode compartments 5.

Although no particular limitations are placed on the positional relationship of the electrode compartments 5 and the headers 10 in the present embodiment, in a case in which each of the bipolar elements 60 is used in a manner such that the given direction D1 along the partition wall 1 becomes a vertical direction, each inlet header may be disposed downward or sideward relative to the corresponding electrode compartment 5 (downward in the drawings), each outlet header may be disposed upward or sideward relative to the corresponding electrode compartment 5 (sideward in the drawings), the distribution pipe in communication with each inlet header may be disposed downward or sideward relative to the corresponding electrode compartment 5 (downward in the drawings), and the collection pipe in communication with each outlet header may be disposed upward or sideward relative to the corresponding electrode compartment 5 (sideward in the drawings) as illustrated in FIGS. 6 and 7.

In the present embodiment, the extension direction of each header 10 is not particularly limited.

Although no particular limitations are placed on the extension direction of each conduit 20 in the present embodiment, it is preferable that a distribution pipe (anode distribution pipe 20Oai, cathode distribution pipe 20Oci) and a collection pipe (anode collection pipe 20Oao, cathode collection pipe 20Oco) extend in a direction perpendicular to the partition wall 1, and more preferable that all conduits 20 extend in a direction perpendicular to the partition wall 1 as in the example illustrated in FIGS. 6 and 7 from a viewpoint of more easily obtaining the effects disclosed herein.

In the present embodiment, from a viewpoint of water electrolysis efficiently, it is preferable that the inlet header and the outlet header are disposed at separated positions in each anode compartment 5a and cathode compartment 5c, and it is also preferable that the inlet header and the outlet header are disposed facing one another with a central part of the electrode compartment 5 interposed therebetween. In a case in which the partition wall 1 has a rectangular shape in plan view as illustrated in FIGS. 4 to 7, it is preferable that the inlet header and the outlet header are disposed symmetrically relative to the center of the rectangle.

In the examples illustrated in FIGS. 4 to 7, each electrode compartment 5 has a cuboid shape as a result of a partition wall 1 having a rectangular shape in plan view and a membrane 4 having a rectangular shape in plan view being arranged in parallel and as a result of an inner surface at a partition wall 1 side of a cuboid outer frame 3 provided at the periphery of the partition wall 1 being perpendicular to the partition wall 1. However, the shape of each electrode compartment 5 in the present disclosure is not limited to the cuboid in the illustrated examples. The shape of each electrode compartment 5 may be modified as appropriate depending on the shapes of the partition wall 1 and the membrane 4 in plan view, the angle between the inner surface at the partition wall 1 side of the outer frame 3 and the partition wall 1, and so forth, and may be any shape so long as the effects disclosed herein are obtained.

Although no particular limitations are placed on the positional relationship of the electrode compartments 5 and the headers 10 in the present embodiment, in a case in which each of the bipolar elements 60 is used in a manner such that the given direction D1 along the partition wall 1 becomes a vertical direction, each inlet header may be disposed downward or sideward relative to the corresponding electrode compartment 5 (downward in the drawings), each outlet header may be disposed upward or sideward relative to the corresponding electrode compartment 5 (upward in the drawings), the distribution pipe in communication with each inlet header may be disposed downward or sideward relative to the corresponding electrode compartment 5 (downward in the drawings), and the collection pipe in communication with each outlet header may be disposed upward or sideward relative to the corresponding electrode compartment 5 (upward in the drawings) as illustrated in FIGS. 4 to 7.

The bipolar electrolyzer 50 of the alkaline water electrolysis system 70 according to the present embodiment may include a plurality of distributors 6 that are disposed in parallel to the given direction D1 along the partition wall 1. These distributors 6 are provided in order to reduce convection in the electrolysis compartments 5 caused by turbulent flow of gas/liquid inside the electrolysis compartments 5, and to inhibit a localized increase in electrolyte temperature.

The electrolyzer 50 of the alkaline water electrolysis system 70 according to the present embodiment preferably includes 50 to 500 bipolar elements 60, more preferably includes 70 to 300 bipolar elements 60, and particularly preferably includes 100 to 200 bipolar elements 60, but the number of bipolar elements 60 is not particularly limited.

The effect of leakage current on gas purity diminishes as the number of pairs decreases, whereas it becomes more difficult to uniformly distribute electrolyte to each electrolytic cell 65 as the number of pairs increases. When the number falls below the lower limit or exceeds the upper limit, it becomes difficult to achieve both an effect of reducing self-discharge when electrical power supply is stopped and enabling electric control system stabilization and an effect of achieving high-efficiency electric power storage (specifically, reduction of pump power and reduction of leakage current).

Moreover, when the number of bipolar elements 60 (number of pairs) is excessively high, it may become difficult to produce the electrolyzer 50, and, in a situation in which a large number of bipolar elements 60 having poor production accuracy are stacked, seal surface pressure tends to become uneven, and leakage of electrolyte or gas may occur.

Components of the bipolar electrolyzer 50 in the alkaline water electrolysis system 70 according to the present embodiment are described in detail below.

In the following, preferred configurations for enhancing the effects disclosed herein are also described in detail.

-Partition wall-

In the present embodiment, the shape of each partition wall 1 may be a plate-like shape of a certain thickness but is not particularly limited.

The shape of each partition wall 1 in plan view is not particularly limited and it may be a rectangular shape (e.g., a square or a rectangle) or a circular shape (e.g., a circle or an ellipse), where corners of a rectangular shape may be rounded.

Note that each partition wall 1 may normally be used in a manner such that the given direction D1 along the partition wall 1 becomes a vertical direction. Specifically, in a case in which the partition wall 1 has a rectangular shape in plan view as illustrated in FIGS. 4 to 7, the partition wall 1 may be used such that the given direction D1 along the partition wall 1 becomes the same direction as one pair of facing edges among the two pairs of facing edges thereof. In the present description, the aforementioned vertical direction is also referred to as the electrolyte passing direction.

From a viewpoint of achieving uniform supply of electric power, each partition wall 1 is preferably made of a material having conductivity, and from perspectives of alkali resistance and heat resistance, preferred materials include nickel, nickel alloy, mild steel, and nickel alloy plated with nickel.

-Electrodes-

In hydrogen production by alkaline water electrolysis according to the present embodiment, reduction of energy consumption, and specifically reduction of the bath voltage, is an important issue. Since the bath voltage is largely dependent on the electrodes 2, the performance of both of the electrodes 2 is important.

Besides the voltage required for water electrolysis that is theoretically determined, the bath voltage of alkaline water electrolysis is split into the overvoltage of the anode reaction (oxygen production), the overvoltage of the cathode reaction (hydrogen production), and the voltage due to the distance between the electrodes 2 (anode 2a and cathode 2c). The term "overvoltage" refers to the excess voltage that it is necessary to apply above the theoretical decomposition potential when passing a certain current. The value of the overvoltage is dependent on the value of the current. The amount of electric power that is consumed can be reduced by using an electrode 2 having a low overvoltage for when the same current is passed.

Requirements for an electrode 2 in order to display a low overvoltage include high conductivity, high oxygen producing capability (or hydrogen producing capability), high wettability of electrolyte on the surface of the electrode 2, and so forth.

Other requirements for an electrode 2 used in alkaline water electrolysis besides having a low overvoltage are that corrosion of a substrate and a catalyst layer of the electrode 2, detachment of the catalyst layer, dissolution in electrolyte, attachment of contained substances to a membrane 4, and so forth should have a low tendency to occur even when an unstable current such as that of renewable energy is used.

Each electrode 2 in the present embodiment is preferably a porous body since this can increase the surface area used in electrolysis and enable efficient removal of gas produced by electrolysis from the surface of the electrode 2. Particularly in the case of a zero-gap electrolyzer, it is preferable that there is a through connection between a surface of the electrode 2 that is in contact with the membrane 4 and a surface at the opposite side of the electrode 2 because it is necessary for produced gas to escape from the rear side of the contact surface with the membrane 4.

Examples of porous bodies that may be used include a plain weave mesh, a perforated metal, an expanded metal, and a metal foam.

A substrate may be used by itself as an electrode 2 in the present embodiment or, alternatively, an electrode having a catalyst layer with high reaction activity on the surface of a substrate may be used. However, it is preferable to use an electrode having a catalyst layer with high reaction activity on the surface of a substrate.

Although the material of the substrate is not particularly limited, mild steel, stainless steel, nickel, and nickel-based alloys are preferable in terms of resistance to the operating environment.

The catalyst layer of an anode 2a preferably has high oxygen producing capability and good durability. Nickel, cobalt, iron, a platinum group element, or the like may be used for the catalyst layer of the anode 2a. In order to achieve the desired activity and durability, the catalyst layer may be formed by using a simple substance of metal of any of palladium, iridium, platinum, gold, ruthenium, rhodium, cerium, nickel, cobalt, tungsten, iron, molybdenum, silver, copper, zirconium, titanium, hafnium, a lanthanoid, or the like, a compound thereof such as an oxide, a complex oxide or alloy including a plurality of metal elements, a mixture of any thereof, a carbon material such as graphene, or the like.

The catalyst layer of a cathode 2c preferably has high hydrogen producing capability. Nickel, cobalt, iron, a platinum group element, or the like may be used for the catalyst layer of the cathode 2c. In order to achieve the desired activity and durability, the catalyst layer may be formed by using any of these examples in the form of a simple substance of metal, a compound such as an oxide, a complex oxide or alloy including a plurality of metal elements, or a mixture thereof. Specific examples include a porous coating prepared by plasma spraying using Raney nickel, a Raney alloy formed from a combination of materials such as nickel and aluminum or nickel and tin, a nickel compound, or a cobalt compound as a material; an alloy or complex compound of nickel and an element selected from cobalt, iron, molybdenum, silver, copper, and the like; a metal or oxide of a platinum group element having high hydrogen producing capability such as platinum or ruthenium; a mixture of such a metal or oxide of a platinum group element with a compound of another platinum group element such as iridium or palladium or a compound of a rare earth metal such as lanthanum or cerium; and a carbon material such as graphene. In order to achieve high catalytic activity and durability, a plurality of layers of these materials may be present or a plurality of these materials may be present in the catalyst layer. Organic substances such as polymers may be contained in order to improve durability and adhesion to the substrate.

-Outer frame-

Although the shape of each outer frame 3 in the present embodiment is not particularly limited as long as it can border the corresponding partition wall 1, the outer frame 3 may have a shape including an inner surface extending along an extension of the partition wall 1 in a direction perpendicular to the plane of the partition wall 1.

The shape of the outer frame 3 is not particularly limited and may be appropriately determined according to the shape of the partition wall 1 in plan view.

The material of the outer frame 3 is preferably a material having conductivity. From perspectives of alkali resistance and heat resistance, nickel, nickel alloy, mild steel, and nickel alloy plated with nickel are preferable.

-Membrane-

A membrane 4 displaying ion permeability is used as each membrane 4 in the bipolar electrolyzer 50 of the alkaline water electrolysis system 70 according to the present embodiment in order that produced hydrogen gas and oxygen gas can be separated from one another while still conducting ions. This ion permeable membrane 4 may be an ion exchange membrane having ion exchange ability or a porous membrane through which electrolyte can permeate. The ion permeable membrane 4 preferably has low gas permeability, high ion conductivity, low electron conductivity, and high strength.

--Porous membrane--

The porous membrane has a plurality of fine through-holes and has a structure that allows permeation of electrolyte through the membrane 4. Control of the porous structure in terms of pore diameter, porosity, and hydrophilicity is highly important for achieving ion conduction through permeation of the porous membrane by electrolyte. On the other hand, other than electrolyte, the porous membrane is required to not allow produced gas to pass (i.e., display gas blocking). Control of the porous structure is also important from this viewpoint.

The porous membrane has a plurality of fine through-holes and may be, for example, a polymeric porous membrane, an inorganic porous membrane, a woven fabric, or a nonwoven fabric. These may be prepared by known techniques.

The porous membrane thickness is not particularly limited, but is preferably not less than 200 $\mu$m and not more than 700 $\mu$m. When the porous membrane thickness is 250 $\mu$m or more, even better gas blocking can be obtained, and strength of the porous membrane against impact can be further improved. From this viewpoint, the lower limit for the porous membrane thickness is more preferably 300 $\mu$m or more, even more preferably 350 $\mu$m or more, and further preferably 400 $\mu$m or more. On the other hand, even better ion permeability can be maintained when the porous membrane thickness is 700 $\mu$m or less because ion permeability tends not to be impaired by resistance due to electrolyte contained in pores during operation. From this viewpoint, the upper limit for the porous membrane thickness is more preferably 600 $\mu$m or less, even more preferably 550 $\mu$m or less, and further preferably 500 $\mu$m or less. These effects can be further improved, in particular, when the polymeric resin includes at least one selected from the group consisting of polysulfone, polyethersulfone, and polyphenylsulfone.

--Ion exchange membrane--

Examples of ion exchange membranes that may be used include cation exchange membranes that allow selective permeation of cations and anion exchange membranes that allow selective permeation of anions. Either type of ion exchange membrane may be used.

Known materials may be used as the material of the ion exchange membrane without any particular limitations. For example, a fluorine-containing resin or a modified resin of a polystyrene-divinylbenzene copolymer can suitably be used. In particular, a fluorine-containing ion exchange membrane is preferable due to excelling in terms of heat resistance, chemical resistance, and the like.

((Zero-gap structure))

In each bipolar element 60 of a zero-gap cell, it is preferable to adopt a configuration in which a spring (elastic body) is disposed between an electrode 2 and the partition wall 1 and in which the electrode 2 is supported by the spring as a means of reducing inter-electrode distance. For instance, in a first example, a spring made of a conductive material may be attached to the partition wall 1, and the electrode 2 may be attached to the spring. In a second example, a spring may be attached to electrode ribs 6 that are attached to the partition wall 1, and the electrode 2 may be attached to the spring. In the case of adopting such a configuration using an elastic body, it is necessary to appropriately adjust the strength of the spring, the number of springs, the shape, and the like, as necessary, so as not to introduce non-uniformity in the pressure of the electrode 2 against the membrane 4.

Further, by strengthening the rigidity of the other electrode 2 paired with the electrode 2 supported via the elastic body, the other electrode is structured to have little deformation even when pressed. On the other hand, by providing the electrode 2 supported via the elastic body with a flexible structure capable of deforming when pressed against the membrane 4, irregularities due to tolerance of fabrication accuracy of the electrolytic cell 65, deformation of the electrode 2, and the like can be absorbed, and a zero-gap can be maintained.

In the bipolar electrolyzer 50 of the alkaline water electrolysis system 70 according to the present embodiment, a conductive elastic body 2e and a current collector 2r are disposed between a partition wall 1 and a cathode 2c or anode 2a such that the conductive elastic body 2e is interposed between the current collector 2r and the cathode 2c or anode 2a.

-Current collector-

The current collector 2r transmits electricity to a conductive elastic body 2e and/or electrode 2 stacked thereon, supports the loads received from them, and has a role of allowing gas produced from the electrode 2 to pass through to the partition wall 1 side unhindered. Accordingly, the current collector 2r is preferably in the form of an expanded metal, a punched porous plate, or the like. In this case, the open fraction of the current collector 2r is preferably within a range allowing hydrogen gas produced from the electrode 2 to escape to the partition wall 1 side unhindered. However, if the open fraction is too high, problems such as reduced strength of the current collector and lower conductivity to the conductive elastic body 2e may arise, and if the open fraction is too low, this may adversely affect gas escape.

Nickel, nickel alloy, stainless steel, mild steel, and the like can be used as the material of the current collector 2r from perspectives of conductivity and alkali resistance, yet from the viewpoint of corrosion resistance, nickel and mild steel, stainless steel, and nickel alloy plated with nickel are preferred.

-Conductive elastic body-

The conductive elastic body 2e is provided in-between and in contact with the current collector 2r and the electrode 2, and essential requirements thereof are that the conductive elastic body 2e transmits electricity to the electrode 2 and does not hinder diffusion of gas produced from the electrode 2. This is because if diffusion of gas is hindered, electric resistance increases and the area of the electrode 2 used for electrolysis decreases, resulting in lower electrolysis efficiency. The most important role of the conductive elastic body 2e is to bring the membrane 4 and the electrode 2 into close contact with each other by evenly applying an appropriate pressure to the electrode 2 so as not to damage the membrane 4.

Typical known conductive elastic bodies may be used as the conductive elastic body 2e. For example, a cushion mat obtained through corrugation of woven nickel wires having a wire diameter of approximately 0.05 mm to 0.5 mm is preferable since it is easy to maintain the zero-gap structure Z therewith.

-Electrode compartments-

In the bipolar electrolyzer 50 according to the present embodiment, the partition walls 1, outer frames 3, and membranes 4 define electrode compartments 5 through which electrolyte passes as illustrated in FIGS. 4 to 7.

In the present embodiment, a header 10 of the bipolar electrolyzer may be disposed as an internal header 10I or an external header 10O. In the illustrated example, spaces occupied by the anode 2a and the cathode 2c themselves may be spaces inside the respective electrode compartments 5, for example. Moreover, particularly in a case in which a gas-liquid separation box is provided, space occupied by the gas-liquid separation box may also be space inside the electrode compartments 5.

-Distributors-

In the bipolar electrolyzer 50 of the alkaline water electrolysis system 70 according to the present embodiment, it is preferable that distributors 6 (anode distributors 6a and cathode distributors 6c) are attached to each partition wall 1, and that the distributors 6 are each physically connected to the corresponding electrode 2. With this configuration, the distributors 6 serve as supports for the electrodes 2, making it easier to maintain the zero-gap structure Z.

For each of the distributors 6, an electrode 2 may be disposed thereon, or a current collector 2r, a conductive elastic body 2e, and an electrode 2 may be disposed thereon in this order.

In the previously described example of the bipolar electrolyzer 50 of the alkaline water electrolysis system 70, a structure in which distributors 6, a current collector 2r, a conductive elastic body 2e, and an electrode 2 are stacked in this order is adopted in each cathode compartment 5c, whereas a structure in which distributors 6 and an electrode 2 are stacked in this order is adopted in each anode compartment 5a.

Note that although a "distributors 6/current collector 2r/conductive elastic body 2e/electrode 2" structure is adopted in each cathode compartment 5c and a "distributors 6/electrode 2" structure is adopted in each anode compartment 5a in the previously described example of the bipolar electrolyzer 50 of the alkaline water electrolysis system 70, this is not a limitation in the present disclosure and a "distributors 6/current collector 2r/conductive elastic body 2e/electrode 2" structure may also be adopted in each anode compartment 5a.

The distributors 6 (anode distributors 6a and cathode distributors 6c) preferably have a role of transmitting current from the partition wall 1 to the anode 2a or cathode 2c in addition to having a role of supporting the anode 2a or cathode 2c.

In the bipolar electrolyzer 50 of the alkaline water electrolysis system 70 according to the present embodiment, it is preferable that at least part of the distributors 6 is conductive, and more preferable that the whole of the distributors 6 is conductive. This configuration can inhibit a rise in cell voltage due to electrode deflection.

A conductive metal is typically used as the material of the distributors 6. For example, nickel-plated mild steel, stainless steel, nickel, or the like may be used.

-Gaskets-

In the bipolar electrolyzer 50 of the alkaline water electrolysis system 70 according to the present embodiment, it is preferable that gaskets 7 including the membranes 4 are sandwiched between the outer frames 3 bordering the partition walls 1.

Each of the gaskets 7 is used for providing a seal against electrolyte and produced gas between each of the bipolar elements 60 and the membrane 4 and between the bipolar elements 60, and can prevent leakage of electrolyte and produced gas to the outside of the electrolyzer and gas mixing between the electrode compartments.

The typical structure of the gasket 7 is that of a quadrilateral or annular shape from which an electrode surface is hollowed out in accordance with a surface in contact with the frame of an element. A membrane 4 can be stacked between elements in a form in which the membrane 4 is sandwiched between two gaskets such as described above. Moreover, it is preferable that the gasket 7 has a slit for housing the membrane 4 such that the membrane 4 can be held thereby and that the gasket 7 has an opening such that the housed partition wall 1 can be exposed at both sides of the gasket 7. As a result, the gasket 7 has a structure in which the periphery of the membrane 4 is housed in the slit and in which an end surface at the periphery of the membrane 4 is covered. This can more reliably prevent leakage of electrolyte and gas from the end surface of the membrane 4.

The material of the gasket 7 is not particularly limited, and a known rubber material, resin material, or the like that is an electrical insulator may be selected.

Specific examples of such rubber and resin materials include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluororubber (FR), isobutylene-isoprene rubber (IIR), urethane rubber (UR), and chlorosulfonated polyethylene rubber (CSM); fluororesin materials such as polytetrafluoroethylene (PTFE), tetrafluoroethylene-perfluoroalkyl vinyl ether copolymer (PFA), tetrafluoroethylene-ethylene copolymer (ETFE), and chlorotrifluoroethylene-ethylene copolymer (ECTFE); and other resin materials such as polyphenylene sulfide (PPS), polyethylene, polyimide, and polyacetal. Of these, ethylene-propylene-diene rubber (EPDM) and fluororubber (FR) are particularly suitable from viewpoints of elastic modulus and alkali resistance.

-Header-

The bipolar electrolyzer 50 of the alkaline water electrolysis system 70 comprises a cathode compartment 5c and an anode compartment 5a for each electrolytic cell 65. In order to conduct an electrolysis reaction continuously in the electrolyzer 50, it is necessary to continuously supply electrolyte that contains a sufficient amount of material to be consumed by electrolysis into the cathode compartment 5c and the anode compartment 5a of each electrolytic cell 65.

Each electrolytic cell 65 is connected to electrolyte supply/discharge piping called a header 10, which is shared by a plurality of electrolytic cells 65. In general, an anode distribution pipe is called an anode inlet header 10ai, a cathode distribution pipe is called a cathode inlet header 10ci, an anode collection pipe is called an anode outlet header 10ao, and a cathode collection pipe is called a cathode outlet header 10co. The electrolytic cell 65 is connected to the distribution pipe for each electrode and the collection pipe for each electrode through a hose or the like.

Although the material of the header 10 is not particularly limited, it is necessary to adopt a material that can sufficiently withstand corrosive properties of the electrolyte that is to be used, operating conditions such as pressure and temperature, and so on. The material of the header 10 may be iron, nickel, cobalt, PTFE, ETFE, PFA, polyvinyl chloride, polyethylene, or the like.

In the present embodiment, the extent of each electrode compartment 5 varies depending on the detailed structure of the outer frame 3 disposed at the periphery of the partition wall 1, and the detailed structure of the outer frame 3 varies depending on the form of arrangement of the header 10 (pipes for electrolyte distribution/collection) attached to the outer frame 3. Representative examples of forms of arrangement of the header 10 of the bipolar electrolyzer 50 are an internal header 10I type and an external header 10O type.

-Internal header-

The internal header 10I is a type in which the bipolar electrolyzer 50 and the header 10 (pipes for electrolyte distribution/collection) have a unified structure.

More specifically, in an internal header 10I type bipolar electrolyzer 50, an anode inlet header 10Iai and a cathode inlet header 10Ici are disposed at a lower part inside the partition wall 1 and/or inside the outer frame 3 and are disposed such as to extend in a direction perpendicular to the partition wall 1, whereas an anode outlet header 10Iao and a cathode outlet header 10Ico are disposed at an upper part inside the partition wall 1 and/or inside the outer frame 3 and are disposed such as to extend in a direction perpendicular to the partition wall 1.

The anode inlet header 10Iai, cathode inlet header 10Ici, anode outlet header 10Iao, and cathode outlet header 10Ico that are included inside an internal header 10I type bipolar electrolyzer 50 are referred to collectively as an internal header 10I.

In an example of the internal header 10I type, the anode inlet header 10Iai and the cathode inlet header 10Ici are included in part of a lower part of the outer frame 3 disposed at the periphery of the partition wall 1, and, similarly, the anode outlet header 10Iao and the cathode outlet header 10Ico are included in part of an upper part of the outer frame 3 disposed at the periphery of the partition wall 1.

-External header-

The external header 10O type is a type in which the bipolar electrolyzer 50 and the header 10 (pipes for electrolyte distribution/collection) are separate.

In the case of an external header 10O type bipolar electrolyzer 50, an anode inlet header 10Oai and a cathode inlet header 10Oci are separately provided in a manner such as to run alongside the electrolyzer 50 in a direction perpendicular to the current-carrying surface of an electrolytic cell 65. The anode inlet header 10Oai and the cathode inlet header 10Oci are connected to each electrolytic cell 65 by a hose.

The anode inlet header 10Oai, cathode inlet header 10Oci, anode outlet header 10Oao, and cathode outlet header 10Oco that are externally connected to the external header 10O type bipolar electrolyzer 50 are collectively referred to as an external header 10O.

In an example of the external header 10O type, lumen-like members are provided at through-holes for headers 10 in a lower part of the outer frame 3 disposed at the periphery of the partition wall 1, and these lumen-like members are connected to the anode inlet header 10Oai and the cathode inlet header 10Oci. Likewise, lumen-like members (for example, a hose or a tube) are provided at through-holes for headers 10 in an upper part of the outer frame 3 disposed at the periphery of the partition wall 1, and these lumen-like members are connected to the anode outlet header 10Oao and a cathode outlet header 10Oco.

The bipolar electrolyzer 50 of internal header 10I type or external header 10O type may include a gas-liquid separation box for separating electrolyte and gas produced by electrolysis inside the bipolar electrolyzer 50. The installation position of the gas-liquid separation box is not particularly limited. For example, a gas-liquid separation box may be installed between the anode compartment 5a and the anode outlet header 10ao and/or between the cathode compartment 5c and the cathode outlet header 10co.

The surface of the gas-liquid separation box may be coated with a coating material that can sufficiently withstand corrosive properties of the electrolyte, operating conditions such as pressure and temperature, and so on. An electrically insulating material may be adopted as the coating material with the objective of increasing electric resistance of a leakage current circuit inside the electrolyzer. For example, EPDM, PTFE, ETFE, PFA, polyvinyl chloride, polyethylene, or the like may be adopted as the coating material.

(Alkaline water electrolysis system)

FIG. 1 generally illustrates an alkaline water electrolysis system according to an example of the present embodiment.

As illustrated in FIG. 1, for example, the alkaline water electrolysis system 70 according to the present embodiment includes an electrolyzer 50, a feed pump 71 for circulating electrolyte, gas-liquid separation tanks 72 (hydrogen separation tank 72h and oxygen separation tank 72o) for separating electrolyte from hydrogen and/or from oxygen, and a water replenisher 73 for replenishing water consumed by electrolysis.

Through the alkaline water electrolysis system 70 according to the present embodiment, it is possible to reduce self-discharge when electric power supply is stopped during operation under a variable power supply such as renewable energy, and achieve electric control system stabilization.

The following provides a detailed description of the alkaline water electrolysis system 70 according to the present embodiment together with details relating to the gas-liquid separation tanks 72.

-Gas-liquid separation tanks-

Multiple tanks are used in the alkaline water electrolysis system 70 according to the present embodiment. Specifically, although a gas-liquid separation tank 72 and a tank that holds electrolyte are the main examples of tanks that are used in the system, these tanks may be any vessels that can store liquid used in the system without any particular limitations.

The gas-liquid separation tanks 72 have an important role in separating gas contained in electrolyte at the anode 2a side and the cathode 2c side after completion of alkaline water electrolysis in the alkaline water electrolysis system 70.

The gas-liquid separation tanks 72 used in the present embodiment include a hydrogen separation tank 72h that separates electrolyte and hydrogen gas and an oxygen separation tank 72o that separates electrolyte and oxygen gas.

The hydrogen separation tank 72h is connected to the cathode compartments 5c and the oxygen separation tank 72o is connected to the anode compartments 5a.

The alkaline water electrolysis system 70 includes two gas-liquid separation tanks 72: the oxygen separation tank 72o that is used for the anode compartments 5a and the hydrogen separation tank 72h that is used for the cathode compartments 5c.

The gas-liquid separation tank 72 for the anode compartments 5a separates oxygen gas produced in the anode compartments 5a and electrolyte, whereas the gas-liquid separation tank 72 for the cathode compartments 5c separates hydrogen gas produced in the cathode compartments 5c and electrolyte.

Electrolyte and produced gas are discharged from the electrolytic cells 65 in a mixed state, and this mixture flows into the gas-liquid separation tank 72. If gas-liquid separation is not carried out appropriately, oxygen gas and hydrogen gas are mixed when electrolyte of the cathode compartments 5c and electrolyte of the anode compartments 5a are mixed, which leads to lower gas purity.

Gas and electrolyte that flow into each of the gas-liquid separation tanks 72 separate with the gas as a gas phase that is an upper layer in the tank and the electrolyte as a liquid phase that is a lower layer in the tank. The degree of gas-liquid separation depends on the flux of electrolyte inside the gas-liquid separation tank 72, the speed at which produced gas bubbles rise, and the residence time inside the gas-liquid separation tank 72.

The shape of each of the gas-liquid separation tanks 72 in the alkaline water electrolysis system 70 according to the present embodiment is not particularly limited. For example, the gas-liquid separation tank 72 may have a three-dimensional shape such that a contour thereof in a cross-section for a plane perpendicular to an axial direction is a curve (for example, a circle or an ellipse), and may, more specifically, have a circular tube shape.

FIG. 3 illustrates a gas-liquid separation tank of an alkaline water electrolysis system according to an example of the present embodiment that has a circular tube shape.

(A) in FIG. 3 is a cross-sectional view for a plane along an axial direction of a gas-liquid separation tank, wherein: (i) is a diagram relating to a gas-liquid separation tank of an alkaline water electrolysis system according to an example of the present embodiment; (ii) is a diagram relating to a gas-liquid separation tank of an alkaline water electrolysis system according to a comparative example; and (iii) is a diagram for explanation of an angle $\delta$.

In the alkaline water electrolysis system 70 according to the present embodiment, an inflow port 72i by which a mixture of gas and electrolyte flows into the gas-liquid separation tank 72 from the electrolyzer 50 is disposed at a higher position than a liquid surface 72s of electrolyte inside the gas-liquid separation tank 72 as illustrated by (A)(i) in FIG. 3.

This configuration can ensure that there is time for gas to escape before the mixture of gas and electrolyte reaches the electrolyte liquid surface 72s from the inflow port 72i and can significantly improve gas-liquid separation performance in the gas-liquid separation tank 72.

In the alkaline water electrolysis system of the comparative example for the present embodiment, an inflow port 72i is disposed at a lower position than a liquid surface 72s of electrolyte inside a gas-liquid separation tank 72 (i.e., the mixture of gas and electrolyte flows into electrolyte) as illustrated by (A)(ii) in FIG. 3. This configuration may not provide adequate gas-liquid separation performance.

As previously described, a length hi from a bottom surface of the gas-liquid separation tank 72 to the position of the inflow port 72i is larger than a length hs from the bottom surface of the gas-liquid separation tank 72 to the electrolyte liquid surface 72s.

When the height of the gas-liquid separation tank 72 is taken to be H, the length hs from the bottom surface of the gas-liquid separation tank 72 to the electrolyte liquid surface 72s is preferably 0.1H to 0.9H, and more preferably 0.3H to 0.7H (refer to (A) in FIG. 3).

Moreover, when the height of the gas-liquid separation tank 72 is taken to be H, the length hi from the bottom surface of the gas-liquid separation tank 72 to the position of the inflow port 72i is preferably 0.11H to 0.91H, and more preferably 0.31H to 0.71H (refer to (A) in FIG. 3).

In the present embodiment, it is most preferable that hs is 0.3H to 0.7H and hi is 0.4H to 0.8H.

In more detail, in the configuration illustrated by (A)(i) in FIG. 3, an angle $\delta$ formed by an extension direction of the inflow port 72i relative to the electrolyte liquid surface 72s in the cross-section for the plane along the axial direction of the gas-liquid separation tank may be 0 degree to 90 degrees (0 degree in (A)(i) of FIG. 3).

Note that the arrangement of an inflow port 72ih in the hydrogen separation tank 72h and an inflow port 72io in the oxygen separation tank 72o may be the same as or different from one another. The configuration of the gas-liquid separation tank 72 described above may be set independently in the hydrogen separation tank 72h and the oxygen separation tank 72o.

(B) in FIG. 3 is a cross-sectional view for a plane perpendicular to an axial direction of a gas-liquid separation tank, wherein: (i) is a diagram relating to a gas-liquid separation tank of an alkaline water electrolysis system according to an example of the present embodiment; (ii) is a diagram relating to a gas-liquid separation tank of an alkaline water electrolysis system according to an example of the present embodiment; and (iii) is a diagram for explanation of an angle $\theta$.

In the alkaline water electrolysis system 70 according to the present embodiment, piping 72in that is attached to the inflow port 72i may be disposed such that an extension direction of the piping 72in is perpendicular to an inner wall of the gas-liquid separation tank 72 as illustrated by (B)(i) in FIG. 3.

On the other hand, it is preferable that the piping 72in attached to the inflow port 72i is disposed along the inner wall of the gas-liquid separation tank 72 in the alkaline water electrolysis system 70 according to the present embodiment as illustrated by (B)(ii) in FIG. 3.

In more detail, in the configurations illustrated by (B)(i) and (ii) in FIG. 3, an angle $\theta$ formed by an extension direction of the inflow port 72i relative to an imaginary line (two-dot chain line in the drawings) that links an axis indicated by point A and the inflow port 72i in the cross-section for the plane perpendicular to the axial direction of the gas-liquid separation tank 72 may be 0 degree to 90 degrees (0 degree in (B)(i) and 90 degrees in (B)(ii) of FIG. 3). This angle $\theta$ is preferably 60 degrees to 90 degrees, and more preferably 90 degrees. Note that the angle $\theta$ is the smaller angle of angles formed by the extension direction of the inflow port 72i relative to the aforementioned imaginary line.

More specifically, it is preferable that in the cross-section for the plane perpendicular to the axial direction of the gas-liquid separation tank 72, a tank radial direction outer side inner wall of the piping 72in attached to the inflow port 72i is positioned on a tangent to the inner wall of the gas-liquid separation tank 72. This structure can further improve gas-liquid separation performance.

In the present embodiment, the configuration illustrated by (B)(ii) in FIG. 3 is, more specifically, preferably a configuration in which the tank radial direction outer side inner wall of the piping 72in is positioned on a tangent to the inner wall of the gas-liquid separation tank.

Through this configuration, electrolyte that is in a mixed state with gas can flow into the gas-liquid separation tank 72 as a swirling flow from further upward than the liquid surface 72s of electrolyte accumulated in the tank, a longer gas-liquid separation time can be achieved, and the hydrogen concentration in oxygen in the oxygen separation tank 72o and the oxygen concentration in hydrogen in the hydrogen separation tank 72h can be reduced.

In the alkaline water electrolysis system 70 according to the present embodiment, the previously described external header 10O type or the previously described internal header 10I type may be adopted without any particular limitations, but the internal header 10I type is preferable.

Although the internal header 10I type can suitably be adopted in a situation in which there are restrictions in terms of installation footprint, gas purity tends to decrease when the internal header 10I type is adopted. However, good gas purity can be obtained even when the alkaline water electrolysis system 70 is of the internal header 10I type. Therefore, an effect of improving gas-liquid separation performance can beneficially be obtained.

As illustrated in FIG. 1, the alkaline water electrolysis system 70 according to the present embodiment further includes a confluence pipe 90 that is connected to the hydrogen separation tank 72h that separates electrolyte and hydrogen gas and to the oxygen separation tank 72o that separates electrolyte and oxygen gas.

Since reduction of gas purity is liable to occur in a one-liquid circulation system in which electrolyte discharged from both tanks is mixed through the confluence pipe 90, the effect of improving gas-liquid separation performance in the alkaline water electrolysis system 70 according to the present embodiment can be beneficially obtained.

No particular limitations are placed on the arrangement of the confluence pipe 90 so long as it enables confluence of electrolyte discharged from the hydrogen separation tank 72h and electrolyte discharged from the oxygen separation tank 72o.

The material of the gas-liquid separation tanks 72 in the alkaline water electrolysis system 70 according to the present embodiment may, for example, be an alkali-resistant metal such as nickel or SUS.

A resin lining layer (not illustrated) composed of one layer or two or more layers is preferably included at the inner surface of each of the gas-liquid separation tanks 72 in the alkaline water electrolysis system 70 according to the present embodiment.

The material of the resin lining layer is preferably a fluororesin. Examples of fluororesins that may be used include polytetrafluoroethylene (PTFE), tetrafluoroethylene-perfluoroalkyl vinyl ether copolymer (PFA), tetrafluoroethylene-hexafluoropropylene copolymer (FEP), and tetrafluoroethylene-ethylene copolymer (ETFE).

Through selection of a fluororesin, durability against the electrode solution used for alkaline water electrolysis in the present disclosure can be improved, in particular.

The thickness of the resin lining layer is preferably 0.5 mm to 4.0 mm, and more preferably 1.0 mm to 2.0 mm. Degradation of the inner surface of the tank caused by gas or electrolyte tends to occur if the resin lining layer is thinner than 0.5 mm, whereas residual stress may be released due to high temperature or alkali, and deformation or peeling may occur if the resin lining layer is thicker than 4.0 mm. Durability of the gas-liquid separation tank 72 can be improved by adopting a thickness that is within the range set forth above.

The standard deviation of the thickness of the resin lining layer is preferably 1.0 mm or less, and more preferably 0.5 mm or less. By controlling non-uniformity of thickness, improvement of durability can be achieved.

Control of non-uniformity of thickness can be performed by adjusting conditions in blasting of the surface of the tank that is performed before formation of the lining layer.

In the present embodiment, the resin lining layer may be produced by a typically used method.

The inner surface of the gas-liquid separation tank 72 may be subjected to one or more of degreasing, blasting with sand or the like, and priming prior to formation of the resin lining layer in the present embodiment.

Formation of the resin lining layer may, for example, be carried out by rotary firing, coating by powder coating, liquid coating, spraying, or the like.

In a situation in which a resin lining layer is included at the inner surface of a gas-liquid separation tank 72 in the alkaline water electrolysis system 70 according to the present embodiment, it is preferable that an outer surface of the gas-liquid separation tank 72 is covered by a heat insulating material. Since degradation of the inner surface of a tank 72 becomes noticeable under high temperature conditions, the effect of inhibiting degradation of the inner surface of the tank 72 due to gas or electrolyte described above can be beneficially obtained when this heat insulating material is used.

The heat insulating material may be a typical insulating material such as glass wool or foam.

The following describes the gas-liquid separation tanks 72 in more detail.

In each of the gas-liquid separation tanks 72, electrolyte remaining after gas has been separated therefrom flows out from an outflow port at the bottom of the tank and flows back into the electrolytic cells 65 to thereby form a circulation route. Oxygen and hydrogen gas discharged from discharge ports at the top of the tanks are each in a state containing alkaline mist. Therefore, it is preferable that a device that can liquidize excess mist and return it to the gas-liquid separation tanks 72, such as a mist separator or a cooler, is installed downstream of each of the discharge ports.

Each of the gas-liquid separation tanks 72 may include a liquid level meter for determining the height of the liquid surface of electrolyte accumulated inside the gas-liquid separation tank 72.

It is also preferable that each of the gas-liquid separation tanks 72 includes a pressure release valve. Through provision of this pressure release valve, even when the pressure increases due to production of gas by electrolysis, this pressure can be safely reduced if the design pressure is exceeded.

The surface of electrolyte in each of the gas-liquid separation tanks 72 is preferably higher than an upper surface of the electrolyzer 50 in order to prevent lowering of the liquid surface in the electrolyzer while circulation is stopped, but this is not a limitation.

It also preferable that a shut-off valve is provided between the electrolytic cells 65 and each of the gas-liquid separation tanks 72, but this is not a limitation.

The capacity of each of the gas-liquid separation tanks 72 is preferably small in consideration of installation space. However, since the liquid surface inside the tank may change in a case in which the pressure difference of the cathodes 2c and the anodes 2a increases or a case in which a value of the electrolysis current changes, it is necessary to take into account this change in the liquid surface.

Likewise, the tank height is preferably high because susceptibility to changes such as described above is higher with a low tank height.

The following describes other components of the alkaline water electrolysis system 70 according to the present embodiment.

-Feed pump-

The feed pump 71 that is used in the present embodiment may be selected as appropriate without any particular limitations.

-Water replenisher-

The water replenisher 73 that is used in the present embodiment may be selected as appropriate without any particular limitations.

Although water that is used may be from a general water supply, it is preferable to use deionized water, RO water, ultrapure water, or the like when operation over a long period is considered.

-Other components-

In addition to the electrolyzer 50, the gas-liquid separation tanks 72, and the water replenisher 73, the alkaline water electrolysis system 70 according to the present embodiment may include a rectifier 74, an oxygen concentration meter 75, a hydrogen concentration meter 76, a flow meter 77, a pressure gauge 78, a heat exchanger 79, and a pressure control valve 80.

Moreover, the alkaline water electrolysis system 70 according to the present embodiment preferably further includes a detector for detecting stopping of electric power supply and a controller for automatically stopping the feed pump. Through inclusion of the detector and the controller, the effect of self-discharge can be efficiently reduced without human operation even under an electric power supply like renewable energy that has severe variation.

(Alkaline water electrolysis method)

An alkaline water electrolysis method according to the present embodiment can be implemented using the alkaline water electrolysis system 70 according to the present embodiment.

In the present embodiment, the alkaline water electrolysis system 70 according to the present embodiment can be used without problems with a current density of 0 kA/$m^2$ to 20 kA/$m^2$ under a power supply for which current density varies over time and with an electrolysis temperature of 0°C to 120°C.

On the other hand, the temperature of electrolyte in the electrolytic cells 65 in the alkaline water electrolysis method according to the present embodiment is preferably 40°C or higher, and more preferably 80°C or higher, and is preferably 110°C or lower, and more preferably 95°C or lower.

By setting a temperature range such as set forth above, high electrolysis efficiency can be maintained while also effectively inhibiting degradation of components of the alkaline water electrolysis system 70 caused by heat.

The current density imparted to the electrolytic cells 65 in the alkaline water electrolysis method according to the present embodiment is preferably 1 kA/$m^2$ or more, and more preferably 8 kA/$m^2$ or more, and is preferably 15 kA/$m^2$ or less, and more preferably 10 kA/$m^2$ or less.

In particular, when a variable power supply is used, it is preferable to set the upper limit of the current density within any of the ranges set forth above.

The following describes suitable conditions for the alkaline water electrolysis method according to the present embodiment.

The electrolyte used in the present embodiment may be an alkaline aqueous solution in which an alkali salt is dissolved, and examples thereof include NaOH aqueous solution, KOH aqueous solution, and the like.

The concentration of the alkali salt is preferably 20 mass% to 50 mass%, and more preferably 25 mass% to 40 mass%.

In the present embodiment, the use of 25 mass% to 40 mass% KOH aqueous solution is particularly preferable from viewpoints of ion conductivity, kinematic viscosity, and freezing by cooling.

The pressure inside the electrolytic cells 65 in the alkaline water electrolysis method according to the present embodiment is preferably 3 kPa to 1,000 kPa, and more preferably 3 kPa to 300 kPa.

In the present embodiment, components of the alkaline water electrolysis system 70 such as previously described may be used to produce an alkaline water electrolysis system 70 having a configuration such as illustrated in FIG. 1, for example, but this is not a limitation.

In the present embodiment, it is preferable that the feed pump 71 is stopped when electric power supply to the electrolyzer 50 is stopped in order that the flow of electrolyte in an outlet hose is stopped. By stopping the flow of electrolyte in the outlet hose, electrolyte flows down into an outlet header under its own weight, thereby causing formation of an insulating gas layer inside the outlet hose. Since this infinitely increases liquid resistance of the outlet hose, almost no leakage current flows in the outlet hose. Consequently, the effect of self-discharge can be decreased.

The effect described above becomes significant when a variable power supply such as sunlight or wind power is used in the alkaline water electrolysis method according to the present embodiment.

In a situation in which a variable power supply such as described above is used, and more specifically in a situation in which current densities from low to high are imparted to the alkaline water electrolysis system at random, the hydrogen concentration in oxygen deteriorates particularly at times of low current density. However, this deterioration of hydrogen concentration in oxygen can be suppressed by adopting the alkaline water electrolysis method according to the present embodiment.

(Hydrogen production method)

A hydrogen production method according to the present embodiment is a method of producing hydrogen through water electrolysis of water containing alkali using an electrolyzer and may be implemented using the water electrolysis system according to the present embodiment and the water electrolysis method according to the present embodiment.

In the present embodiment, the water electrolysis system may include at least an electrolyzer and a gas-liquid separation tank.

Moreover, in this system, an inflow port by which a mixture of gas and electrolyte flows into the gas-liquid separation tank from the electrolyzer may be disposed at a higher position than the liquid surface of electrolyte inside the gas-liquid separation tank.

In the present embodiment, the mixture of gas and electrolyte may be caused to flow into the gas-liquid separation tank from the electrolyzer at a higher position than the liquid surface of electrolyte inside the gas-liquid separation tank.

Details relating to the water electrolysis system according to the present embodiment and details relating to the water electrolysis method according to the present embodiment are as previously described.

A second embodiment for resolving the second issue to which the present disclosure relates is described below.

[Alkaline water electrolysis system]

An alkaline water electrolysis system according to the present disclosure is an alkaline water electrolysis system in which electrolyte circulates and that includes at least a bipolar electrolyzer and a gas-liquid separation tank. When h (units: m) is taken to be the vertical direction distance between the liquid surface of electrolyte in the gas-liquid separation tank and a highest vertical direction position of electrolyte returning piping that feeds electrolyte to the gas-liquid separation tank from the bipolar electrolyzer, and when H (units: m) is taken to be the vertical direction distance between a lowest vertical direction position of an electrolyte distribution pipe inlet of the bipolar electrolyzer and the liquid surface of electrolyte in the gas-liquid separation tank, the alkaline water electrolysis system according to the present disclosure satisfies a relationship shown below.

$$0.01 \times H \le h \le 0.5 \times H$$

The highest vertical direction position of the electrolyte returning piping is further vertically upward than the liquid surface of electrolyte in the gas-liquid separation tank, whereas the lowest vertical direction position of the electrolyte distribution pipe inlet is further vertically downward than the liquid surface of electrolyte in the gas-liquid separation tank.

The alkaline water electrolysis system according to the present embodiment can suppress energy use in alkaline water electrolysis because it facilitates circulation of electrolyte. Moreover, in a situation in which a variable power supply is used as an electric power supply, gas purity does not easily deteriorate under low current density conditions and the temperature of electrolyte does not easily rise and membrane degradation does not easily occur under high current density conditions.

FIG. 1 generally illustrates the alkaline water electrolysis system according to the present embodiment.

The alkaline water electrolysis system 70 according to the present embodiment includes a bipolar electrolyzer 50 and a gas-liquid separation tank 72 for separating hydrogen and/or oxygen from electrolyte. It is preferable that the gas-liquid separation tank 72 includes a hydrogen separation tank 72h (cathode-side gas-liquid separation tank) that mainly separates electrolyte and hydrogen and an oxygen separation tank 72o (anode-side gas-liquid separation tank) that mainly separates electrolyte and oxygen.

The alkaline water electrolysis system 70 according to the present embodiment may further include an electric power supply (e.g., an electric power supply with which current density varies over time), a feed pump 71 for circulating electrolyte, a water replenisher for replenishing water consumed by electrolysis, and so forth.

In the alkaline water electrolysis system 70 according to the present embodiment, the bipolar electrolyzer 50 and each gas-liquid separation tank 72 are preferably connected by piping.

Herein, in the alkaline water electrolysis system 70 according to the present embodiment in which electrolyte circulates, piping that returns electrolyte containing hydrogen and/or oxygen to a gas-liquid separation tank 72 from the bipolar electrolyzer 50 is also referred to as electrolyte returning piping 81 (anode electrolyte returning piping 81a, cathode electrolyte returning piping 81c) and piping that feeds electrolyte to the bipolar electrolyzer 50 from a gas-liquid separation tank 72 after gas-liquid separation is also referred to as electrolyte feeding piping 82 (anode electrolyte returning piping 82a, cathode electrolyte returning piping 82c). The anode electrolyte returning piping 82a and the cathode electrolyte returning piping 82c may converge partway along.

A connecting part of electrolyte returning piping 81 and the bipolar electrolyzer 50 (for example, a connecting part of the electrolyte returning piping 81 and an electrolyte collection pipe of the bipolar electrolyzer 50) is also referred to as an electrolyte collection pipe outlet 50o and a connecting part of electrolyte returning piping 81 and a gas-liquid separation tank 72 is also referred to as an inflow port 72i.

Moreover, a connecting part of electrolyte feeding piping 82 and a gas-liquid separation tank 72 is also referred to as an outflow port 72e and a connecting part of the electrolyte feeding piping 82 and the bipolar electrolyzer 50 (for example, a connecting part of the electrolyte feeding piping 82 and an electrolyte distribution pipe of the bipolar electrolyzer 50) is also referred to as an electrolyte distribution pipe inlet 50i.

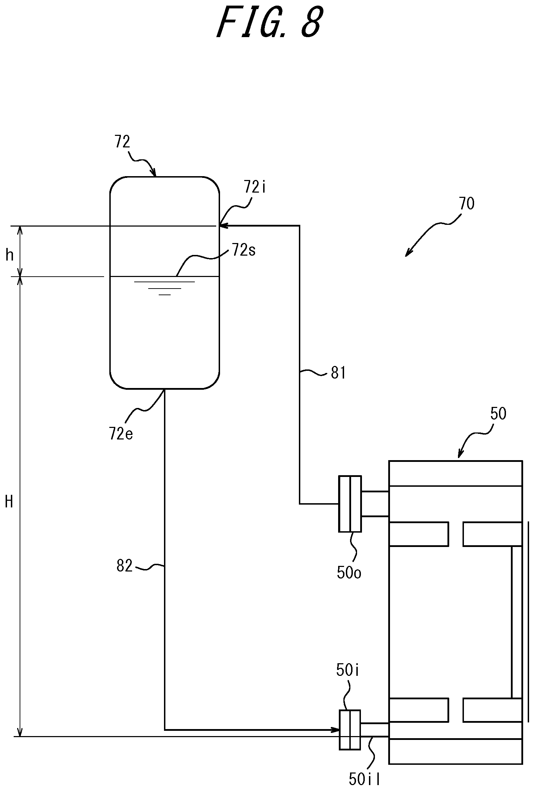

FIG. 8 is a schematic view of the alkaline water electrolysis system according to the present embodiment that illustrates the bipolar electrolyzer 50 and a gas-liquid separation tank 72.

The alkaline water electrolysis system according to the present embodiment is an invention that focuses on the fact that by setting vertical direction positions of the liquid surface 72s of electrolyte in the gas-liquid separation tank, the inflow port 72i of the gas-liquid separation tank, the electrolyte distribution pipe inlet 50i of the bipolar electrolyzer, and so forth based on the relationship of the state of electrolyte (density, bubble fraction, etc.) in the gas-liquid separation tank and the bipolar electrolyzer, better electric power efficiency can be achieved because pump power for circulating electrolyte can be reduced or eliminated, gas purity is less liable to deteriorate under low current density conditions, and membrane degradation caused by increased electrolyte temperature under high current density conditions can be further inhibited.

When h (units: m) is taken to be the vertical direction distance between the liquid surface 72s of electrolyte in the gas-liquid separation tank 72 and a highest vertical direction position 81h of the electrolyte returning piping 81 that feeds electrolyte to the gas-liquid separation tank 72 from the bipolar electrolyzer 50, and when H (units: m) is taken to be the vertical direction distance between a lowest vertical direction position 50il of the electrolyte distribution pipe inlet 50i of the bipolar electrolyzer 50 and the liquid surface 72s of electrolyte in the gas-liquid separation tank, the alkaline water electrolysis system 70 according to the present embodiment satisfies a relationship shown below.

$$0.01 \times H \le h \le 0.5 \times H$$

If h is less than $0.01 \times H$, this results in poorer gas-liquid separation and significantly lower gas purity. From a viewpoint of further stabilizing electrolyte circulation and further improving gas purity, h is preferably more than $0.01 \times H$, more preferably $0.02 \times H$ or more, even more preferably $0.03 \times H$ or more, further preferably $0.04 \times H$ or more, even further preferably 0.05 or more, and particularly preferably $0.1 \times H$ or more.

From a viewpoint of further improving electric power efficiency of the alkaline water electrolysis system and further inhibiting deterioration of gas purity under low current conditions, h is preferably less than $0.5 \times H$, more preferably $0.46 \times H$ or less, even more preferably $0.4 \times H$ or less, and particularly preferably $0.36 \times H$ or less.

Also, from a viewpoint of improving electric power efficiency of the alkaline water electrolysis system and inhibiting deterioration of gas purity under low current conditions, h is preferably (bubble fraction B of electrolyte in bipolar electrolyzer) $\times$ H or less, more preferably $0.9 \times$ bubble fraction $B \times H$ or less, and even more preferably $0.7 \times$ bubble fraction $B \times H$ or less.

Note that the bubble fraction B is a value measured by a method described further below in the EXAMPLES section.

In a case in which there is more than one gas-liquid separation tank 72, it is preferable that at least one of the gas-liquid separation tanks satisfies the requirements set forth above, and more preferable that all of the gas-liquid separation tanks satisfy the requirements set forth above.

The vertical direction distance H between the lowest vertical direction position 50il of the electrolyte distribution pipe inlet 50i of the bipolar electrolyzer 50 and the liquid surface 72s of electrolyte in the gas-liquid separation tank is preferably 0.5 m to 10 m, and more preferably 1.5 m to 4 m from a viewpoint of further facilitating electrolyte circulation and capability of circulation to track varying input electric power. If H is too small, it is difficult to create density difference and to obtain head difference for circulation. If H is too large, inertia of electrolyte increases more easily and capability for tracking changes becomes poor.

The bubble fraction B of electrolyte in the bipolar electrolyzer is preferably not less than 0.01 and not more than 0.5, and more preferably 0.02 to 0.4. The bubble fraction B can be adjusted, for example, through the variation range and/or variation period of the amount of current passed in alkaline water electrolysis, the operating temperature, the electrolyte density, and so forth.

In the alkaline water electrolysis system according to the present embodiment, the highest vertical direction position 81h of the electrolyte returning piping is further vertically upward than the liquid surface 72s of electrolyte in the gas-liquid separation tank, and the lowest vertical direction position 50il of the electrolyte distribution pipe inlet is further vertically downward than the liquid surface 72s of electrolyte in the gas-liquid separation tank (refer to FIG. 8).

The highest vertical direction position 81h of the electrolyte returning piping refers to the highest vertical direction position of a piping inner cavity at the highest vertical direction position of the electrolyte returning piping 81. For example, in a case in which the electrolyte returning piping 81 does not pass through a higher vertical direction position than the inflow port 72i of the gas-liquid separation tank, the highest vertical direction position 81h is the highest vertical direction position of an inner cavity of the inflow port 72i (refer to FIG. 8).

The lowest vertical direction position 50il of the electrolyte distribution pipe inlet refers to a lowest vertical direction position of an inner cavity of the electrolyte distribution pipe inlet.

In the alkaline water electrolysis system according to the present embodiment, the lowest vertical direction position of the electrolyte returning piping 81 is preferably an electrolyte collection pipe outlet 50o. In other words, it is preferable that the electrolyte returning piping 81 does not pass through a lower position than the electrolyte collection pipe outlet 50o.

In a case in which the gas-liquid separation tank 72 includes an oxygen separation tank 72o and a hydrogen separation tank 72h, it is preferable that a relationship ha $\le$ hc is satisfied, and more preferable that a relationship 0.9 $\times$ ha $\le$ hc is satisfied when ha (units: m) is taken to be the vertical direction distance between the liquid surface 72s of electrolyte in the oxygen separation tank 72o and the highest vertical direction position 81h of anode electrolyte returning piping 81a that feeds electrolyte to the oxygen separation tank 72o from the bipolar electrolyzer 50, and when hc (units:

m) is taken to be the vertical direction distance between the liquid surface 72s of electrolyte in the hydrogen separation tank 72h and the highest vertical direction position 81h of cathode electrolyte returning piping 81c that feeds electrolyte to the hydrogen separation tank 72h from the bipolar electrolyzer 50. This is from a viewpoint that by matching the amounts of circulated liquid for electrolyte circulated through the oxygen separation tank 72o and electrolyte circulated through the hydrogen separation tank 72h, liquid level management becomes easier, gas purity is further improved, and electrolyte temperature has a lower tendency to increase.

In the alkaline water electrolysis system according to the present embodiment, it is preferable that electrolyte discharged from the oxygen separation tank 72o and the hydrogen separation tank 72h through outflow ports 72e is mixed and then fed to the bipolar electrolyzer 50 from a viewpoint of further improving gas purity. In other words, it is preferable that anode electrolyte feeding piping 82a and cathode electrolyte feeding piping 82c converge at least once prior to reaching an electrolyte distribution pipe inlet (refer to FIG. 1).

In the alkaline water electrolysis system according to the present embodiment, each gas-liquid separation tank 72 and the bipolar electrolyzer 50 are preferably disposed separately rather than being unified from a viewpoint of further improving gas purity. A flat plane along the electrolyzer of the bipolar electrolyzer and a flat plane along the gas-liquid separation tank may be offset. It is preferable that the gas-liquid separation tank 72 and the bipolar electrolyzer 50 are not in contact, more preferable that the gas-liquid separation tank and the bipolar electrolyzer are separated by 0.1 m or more, and even more preferable that the gas-liquid separation tank and the bipolar electrolyzer are separated by 0.5 m or more.

Although no particular limitations are placed on the material of the electrolyte returning piping 81 and the electrolyte feeding piping 82 in the alkaline water electrolysis system according to the present embodiment, it is necessary to adopt a material that can sufficiently withstand corrosive properties of the used electrolyte and operating conditions such as pressure and temperature. Iron, nickel, cobalt, PTFE, ETFE, PFA, polyvinyl chloride, polyethylene, or the like may be adopted as the aforementioned material.

In the alkaline water electrolysis system according to the present embodiment, it is preferable that the electrolyte returning piping 81 and the electrolyte feeding piping 82 have the same inner cavity diameter from a viewpoint of stabilizing electrolyte circulation. The inner cavity diameter may be the same as that of an electrolyte distribution pipe and an electrolyte collection pipe of the bipolar electrolyzer from a viewpoint of further stabilizing electrolyte circulation.

The length of the electrolyte returning piping 81 and the electrolyte feeding piping 82 are preferably each not less than 0.5 m and not more than 10 m from a viewpoint of stabilizing electrolyte circulation.

A feed pump 71 that is used in the second embodiment may be selected as appropriate without any particular limitations.

By setting the liquid surface of electrolyte in a gas-liquid separation tank, a highest vertical direction position of electrolyte returning piping, and a lowest vertical direction position of an electrolyte distribution pipe inlet such that H and h have the prescribed relationship in the alkaline water electrolysis system according to the present embodiment, electrolyte can be circulated using a feed pump at low power or without using a feed pump, and thus electric power efficiency is excellent. In particular, even better electric power efficiency is achieved by utilizing a difference between density of electrolyte inside the bipolar electrolyzer and density of electrolyte inside the gas-liquid separation tank, for example, in order to circulate electrolyte without using a feed pump.

[Alkaline water electrolysis method]

An alkaline water electrolysis method according to the present embodiment is preferably carried out using the electrolysis system 70 for alkaline water electrolysis according to the present embodiment under conditions satisfying $0.01 \times H \le h \le 0.5 \times H$, and more preferably under conditions satisfying $0.01 \times H \le h \le (De/Dt) \times H$, when h (units: m) is taken to be the vertical direction distance between the liquid surface of electrolyte in a gas-liquid separation tank and a highest vertical direction position of electrolyte returning piping that feeds electrolyte to the gas-liquid separation tank from the bipolar electrolyzer, H (units: m) is taken to be the vertical direction distance between a lowest vertical direction position of an electrolyte distribution pipe inlet of the bipolar electrolyzer and the liquid surface of electrolyte in the gas-liquid separation tank, De (units: $g/cm^3$) is taken to be the density of electrolyte inside the bipolar electrolyzer, and Dt (units: $g/cm^3$) is taken to be the density of electrolyte inside the gas-liquid separation tank.

Through the alkaline water electrolysis method according to the present embodiment, electric power efficiency is improved by reducing pump power of the feed pump and purity of gas obtained under low current density is excellent.

In other words, according to the present embodiment, gas purity under low current density is excellent, and the temperature of electrolyte does not easily increase and membranes in the bipolar electrolyzer do not easily degrade under high current density when alkaline water electrolysis is performed using a variable power supply. By setting the position of the inflow port of the gas-liquid separation tank based on the relationship of density of electrolyte inside the bipolar electrolyzer and density of electrolyte inside the gas-liquid separation tank and utilizing the electrolyte density difference to circulate electrolyte, electric power for electrolyte circulation can be reduced, and electric power efficiency does not easily decrease. Moreover, stable alkaline water electrolysis is possible even when a variable power supply is used because the circulated amount of electrolyte is controlled in accordance with the electrolyte density, which changes in accordance with the electric power.

In the alkaline water electrolysis method according to the present embodiment, the flow rate Q of electrolyte per electrode compartment is controlled in accordance with the size of each electrode compartment 5 and is preferably $1 \times 10^{-7}$ m$^3$/s to $1 \times 10^{-2}$ m$^3$/s, and more preferably $1 \times 10^{-6}$ m$^3$/s to $1 \times 10^{-3}$ m$^3$/s from a viewpoint of increasing the previously described effects.

The temperature of electrolyte inside the bipolar electrolyzer 50 in the alkaline water electrolysis method according to the present embodiment is preferably 80°C to 130°C. The temperature of electrolyte inside the gas-liquid separation tank is preferably 70°C to 120°C, and is more preferably not higher than the temperature of electrolyte inside the bipolar electrolyzer 50.

By adopting a temperature range such as set forth above, high electrolysis efficiency can be maintained while also effectively inhibiting degradation of components of the alkaline water electrolysis system 70, such as gaskets 7 and membranes 4, caused by heat.

The temperature of electrolyte is more preferably 85°C to 125°C, and particularly preferably 90°C to 115°C. Moreover, by setting the gas-liquid separation tank temperature within the range set forth above, it becomes easier to create a density difference between electrolyte inside the bipolar electrolyzer 50 and electrolyte inside the gas-liquid separation tank, and electrolyte can be circulated more easily.

The current density applied to each electrolytic cell 65 in the alkaline water electrolysis method according to the present embodiment is preferably 4 kA/m$^2$ to 20 kA/m$^2$, and more preferably 6 kA/m$^2$ to 15 kA/m$^2$.

In a case in which a variable power supply is used, the variation period of the current density is preferably 1 second to 5,000 seconds, and more preferably 5 seconds to 3,000 seconds.

In particular, when a variable power supply is used, it is easy to obtain an effect when the upper limit of the current density is set within any of the ranges set forth above.

In the alkaline water electrolysis method according to the present embodiment, the pressure inside each electrolytic cell 65 is preferably 3 kPa to 1,000 kPa, and more preferably 3 kPa to 300 kPa.

A third embodiment for resolving the third issue to which the present disclosure relates is described below.

FIG. 1 generally illustrates an alkaline water electrolysis system according to an example of the present embodiment.

(Alkaline water electrolysis system)

The alkaline water electrolysis system 70 according to the present embodiment is an alkaline water electrolysis system including at least an electrolyzer 50, a gas-liquid separation tank 72, a water sealer 91, and a water replenisher 73.

The water sealer 91 is connected downstream of the gas-liquid separation tank 72 and upstream of the water replenisher 73.

In one example, the alkaline water electrolysis system 70 according to the present embodiment further includes a mechanism (not illustrated) that adjusts the amount of water in the alkaline water electrolysis system 70 as a whole.

In the alkaline water electrolysis system 70 according to the present embodiment, the gas-liquid separation tank 72 includes an oxygen separation tank 72o and a hydrogen separation tank 72h. Moreover, the alkaline water electrolysis system 70 also includes a confluence pipe 90 that is connected to the oxygen separation tank 72o and the hydrogen separation tank 72h.

In the alkaline water electrolysis system 70 according to the present embodiment, a water sealer 91 is connected downstream of the oxygen separation tank 72o and/or downstream of the hydrogen separation tank 72h.

The alkaline water electrolysis system 70 according to the present embodiment also includes a buffer tank 92 that is connected downstream of the water sealer 91.

The alkaline water electrolysis system 70 according to the present embodiment further includes piping 93 that is connected downstream of the water sealer 91 and that discharges hydrogen gas and/or oxygen gas out of the system.

A flame arrester 94 is included in the piping, and a mechanism for returning mist-condensation liquid (mist condensed in the flame arrester 94) to the water sealer 91 is also included.

In the alkaline water electrolysis system 70 according to the present embodiment, the flame arrester 94 is disposed with a gas passing direction thereof oriented in a horizontal direction or a downward vertical direction.

The alkaline water electrolysis system 70 according to the present embodiment may be an alkaline water electrolysis system 70 that includes at least an electrolyzer 50, a gas-liquid separation tank 72, and a water replenisher 73.

The alkaline water electrolysis system 70 may further include piping 93 for discharging hydrogen gas and/or oxygen gas out of the system and may include a flame arrester 94 in the piping 93.

Through the alkaline water electrolysis system according to the present embodiment, efficiency of the alkaline water electrolysis system 70 as a whole can be improved using the water sealer and it is possible to achieve an environment that enables efficient gas supply with high reliability and safety of the alkaline water electrolysis system 70.

(Alkaline water electrolysis system)

FIG. 1 generally illustrates an alkaline water electrolysis system according to an example of the present embodiment.

As illustrated in FIG. 1, the alkaline water electrolysis system 70 according to the present embodiment includes, for example, an electrolyzer 50, a feed pump 71 for circulating electrolyte, a gas-liquid separation tank 72 (hydrogen separation tank 72h, oxygen separation tank 72o) for separating electrolyte and hydrogen and/or oxygen, and a water replenisher 73 for replenishing water consumed by electrolysis.

Through the alkaline water electrolysis system 70 according to the present embodiment, self-discharge occurring when electric power supply is stopped during operation with a variable power supply such as renewable energy can be reduced, and electric control system stabilization can be achieved.

The following describes the alkaline water electrolysis system 70 according to the present embodiment in detail.

The alkaline water electrolysis system 70 according to the present embodiment includes at least an electrolyzer 50, a gas-liquid separation tank 72, a water sealer 91, and a water replenisher 73.

A feature in the present embodiment is that water supplied to the system 70 by the water replenisher 73 is supplied via the water sealer 91.

The water replenisher 73 may be a pure water production and supply device.

The water sealer 91 used in the present embodiment includes a vessel that is filled with water. Hydrogen or oxygen produced by alkaline water electrolysis is brought into contact with the water and subsequently collected, and, at the same time, the outside and the inside of the alkaline water electrolysis system 70 are cut off by the water filling the vessel. Through this structure, accidental contamination with substances from the outside and mixing of oxygen with hydrogen gas can be prevented. This can increase safety of the alkaline water electrolysis system 70 and enables continuous gas supply with high reliability.

Through the alkaline water electrolysis system 70 according to the present embodiment, even without separately providing a device referred to as a scrubber, it is possible to achieve a scrubber effect by causing produced gas to pass through sealing water in the water sealer 91.

Moreover, through the alkaline water electrolysis system 70 according to the present embodiment, by collecting water having alkalinity and reusing this water as electrolyte, it is possible to achieve benefits of reduced running cost, maintenance cost, and initial cost through reduction of the amount of water that is supplied from outside the system, through the lack of need to treat water that has become alkaline, and through simplification of system structure.

The water sealer is connected downstream of the gas-liquid separation tank 72 and upstream of the water replenisher 73.

A feature in the present embodiment is that water inside the water sealer 91 is supplied to downstream of the gas-liquid separation tank 72 (refer to FIG. 1).

Through this configuration, water inside the water sealer having a high likelihood of alkali being mixed therein is used in the alkaline water electrolysis system 70 in which alkaline water is circulated, which enables efficient system operation.

The supply position of water from the water sealer 91 to the alkaline water electrolysis system 70 is set as downstream of the gas-liquid separation tank 72 in the same way as a position at which water is directly supplied to the alkaline water electrolysis system 70 from the water replenisher 73 since a supply device of water to the water sealer 91 is combined with the water replenisher 73 of water to the alkaline water electrolysis system 70. This enables effective reuse of water in the water sealer 91, which has previously been disposed of without being used, and allows the water sealer 91 to operate constantly under the same conditions, which enables improved reliability.

In the present embodiment, a water sealer 91 may be used for both the oxygen separation tank 72o and the hydrogen separation tank 72h or may be used for just one of these tanks (FIG. 1 illustrates use at the oxygen side and at the hydrogen side). It is preferable that a water sealer is used for both the oxygen separation tank 72o and the hydrogen separation tank 72h in terms of obtaining highly reliable gas supply.

In a case in which a water sealer is used at both the oxygen side and the hydrogen side, the same water sealer 73 may be used for both or different water sealers 73 may be installed.

In the present embodiment, the alkaline water electrolysis system 70 may include a mechanism for adjusting the amount of water in the system as a whole.

The water sealer 91 may be provided with this function of adjusting the amount of water in the system as a whole. Alternatively, the water sealer 91 and the water replenisher 73 may be regarded as a unified piece of equipment and may be provided with the function of adjusting the amount of water in the system as a whole.

Moreover, since the inside of the system is alkaline, the water sealer 91 may have a function of controlling pH in addition to the function of adjusting the amount of water.

In the alkaline water electrolysis system 70 according to the present embodiment, a liquid level meter 95 may be provided in the water sealer 91.

In the present embodiment, the gas-liquid separation tank 72 may include an oxygen separation tank 72o and a hydrogen separation tank 72h (i.e., two tanks), and a confluence pipe 90 that is connected to the oxygen separation tank 72o and the hydrogen separation tank 72h may also be included.

Electrolyte discharged from these two gas-liquid separation tanks 72o and 72h may be mixed and then flow into the electrolyzer 50 as a one liquid mixed-type configuration.

The configuration of the confluence pipe 90 is not particularly limited so long as it enables mixing of electrolyte discharged from the hydrogen separation tank 72h and electrolyte discharged from the oxygen separation tank 72o.

In the present embodiment, a buffer tank 92 may be provided downstream of the water sealer so that produced water can be temporarily stored in the buffer tank 92 before being supplied (not illustrated). By constantly holding a certain amount of water, water supply can be stabilized, and reliability can be improved.

The amount of water that is introduced into an electrolyte circulation line from the water sealer 91 can set and manage the upper limit and the lower limit of the liquid surface in the gas-liquid separation tank 72.

For example, water may be supplied when the lower limit position is reached, and water supply may be stopped when the upper limit position is reached. Moreover, the amount of water that is supplied can be adjusted in accordance with the electrolysis current density. No limitations are placed on how the amount of water is adjusted in the present embodiment. Control of replenishment water can be performed through the amount of water that is supplied from the water replenisher 73 to the water sealer 91. Further, this control may be performed through a water storage tank based on supply from the water storage tank. In this situation, the supply from the water replenisher 73 to the water sealer 91 may be set as a fixed amount supply and control can be performed through the liquid surface of the water sealer 91.

In the present embodiment, the alkaline water electrolysis system 70 further includes piping 93 for externally discharging hydrogen gas and/or oxygen gas produced through electrolysis of water.

It is preferable that a flame arrester 94 is used in the piping 93 from a viewpoint of increasing safety.

In the present embodiment, the flame arrester 94 has a flashback prevention function and preferably has a gas passage blocking prevention function.

The gas passage blocking prevention function is an effective mechanism for resolving a problem of an outlet passage for gas becoming blocked due to mist contained in the gas accumulating inside the flame arrester 94, which may prevent control of differential pressure of the oxygen side and the hydrogen side, and a problem of the liquid surface level inside the water sealer 91 dropping due to increased pressure inside the water sealer 91.

For example, in a case in which the pressure inside the electrolysis system 70 is controlled to approximately 5 kPa to 100 kPa through a pressure-adjustment valve, the pressure inside the electrolysis system 70 is controlled to a certain pressure in an initial stage of blocking of the flame arrester 94, but as a result of the pressure inside the water sealer 91 increasing, the liquid surface level inside the water sealer 91 drops, leading to reduced water sealing function thereof.

On the other hand, in a case in which the pressure inside the electrolysis system 70 is controlled to approximately 1 kPa to 5 kPa through the water sealing height of water introduced into the water sealer 91, the pressure inside the system increases from whichever of the hydrogen/oxygen gas piping is more severely blocked, and this tends to cause a large change in differential pressure.

In the present embodiment, a mechanism for returning mist that has condensed in the flame arrester 94 to the water sealer is preferably included in the previously described piping 93.

This mechanism may more specifically be a mechanism that moves mist-condensation water on the surface of the flame arrester 94 so as to ensure a gas passage by causing evaporation of mist-condensation water on the surface of the flame arrester 94, by spraying an inert gas in mist to move mist-condensation water, by simply providing an inclination in the flame arrester 94 so that mist-condensation water on the surface of the flame arrester 94 moves, or by attaching the flame arrester 94 with an installation angle that is horizontal relative to the vertical upward direction or from up to down so as to have a structure in which the gas passing direction inside the flame arrester 94 is horizontal or from up to down.

In the present embodiment, the flame arrester 94 is preferably installed with the gas passing direction thereof oriented in a horizontal direction or a downward vertical direction from a viewpoint of controlling differential pressure of the oxygen side and the hydrogen side and inhibiting lowering of the liquid surface level inside the water sealer 91.

The alkaline water electrolysis system 70 according to the present embodiment may include at least an electrolyzer 50, a gas-liquid separation tank 72, and a water replenisher 73.

The alkaline water electrolysis system 70 may further include piping 93 that discharges hydrogen gas and/or oxygen gas out of the system, and a flame arrester 94 may be included in this piping 93.

In this case, the flame arrester 94 may have a mechanism for returning condensed mist to the gas-liquid separation tank 72 or the like in the same way as the mechanism described above.

The following describes components of the alkaline water electrolysis system 70 according to the third embodiment.

-Gas-liquid separation tank-

The gas-liquid separation tank 72 used in the present embodiment includes a hydrogen separation tank 72h that separates electrolyte and hydrogen gas and an oxygen separation tank 72o that separates electrolyte and oxygen gas.

When gas and electrolyte flow into the gas-liquid separation tank 72, the gas separates into a gas phase that is an upper layer in the tank and the electrolyte separates into a liquid phase that is a lower layer in the tank. The degree of gas-liquid separation depends on the flux of electrolyte inside the gas-liquid separation tank 72, the speed at which produced gas bubbles rise, and the residence time inside the gas-liquid separation tank 72.

Electrolyte remaining after gas has been separated therefrom flows out from an outflow port at the bottom of the tank and flows into the electrolytic cells 65 again to thereby form a circulation route. Oxygen and hydrogen gas discharged from discharge ports at the top of the tanks are each in a state containing alkaline mist. Therefore, it is preferable that a device that can liquidize excess mist and return it to the gas-liquid separation tanks 72, such as a mist separator or a cooler, is installed downstream of each of the discharge ports.

-Water replenisher-

The water replenisher 73 that is used in the present embodiment may be selected as appropriate without any particular limitations.

Moreover, the alkaline water electrolysis system 70 according to the present embodiment preferably further includes a detector for detecting suspension of electric power supply and a controller for automatically stopping the feed pump. Through inclusion of the detector and the controller, the effect of self-discharge can be reduced without human operation even under an electric power supply like renewable energy that has severe variation.

(Alkaline water electrolysis method)

An alkaline water electrolysis method according to the present embodiment can be implemented using the alkaline water electrolysis system 70 according to the present embodiment.

The alkaline water electrolysis method according to the present embodiment is a method in which water is supplied by the water replenisher 73 via the water sealer 91.

Through this method, water for water sealing that was conventionally disposed of can be used as water for electrolyte, management and control of the amount of electrolyte and the concentration of electrolyte are facilitated, and the amount of alkaline wastewater treatment can be reduced.

In the alkaline water electrolysis method according to the present embodiment, it is preferable that electrolyte discharged from the hydrogen separation tank 72h and electrolyte discharged from the oxygen separation tank 72o are mixed and then introduced into the electrode compartments 5.

Moreover, in the alkaline water electrolysis method according to the present embodiment, it is preferable that water discharged from the water sealer 91 is supplied to the electrolyzer via a buffer tank 92.

Further, in the alkaline water electrolysis method according to the present embodiment, it is preferable that mist that has condensed in the flame arrester 94 is returned to the water sealer 91.

Through this method, blocking of the gas piping 93 by condensation and accumulation of a mist component in the flame arrester 94 can be inhibited and control of differential pressure of the oxygen side and the hydrogen-side is facilitated.

In the present embodiment, components of the alkaline water electrolysis system 70 such as previously described may be used to produce an alkaline water electrolysis system 70 having a configuration such as illustrated in FIG. 1, for example, but this is not a limitation.

In the present embodiment, it is preferable that a feed pump 71 is stopped when electric power supply to the electrolyzer 50 is stopped in order that the flow of electrolyte in an outlet hose is stopped. By stopping the flow of electrolyte in the outlet hose, electrolyte flows down into an outlet header under its own weight, thereby causing formation of an insulating gas layer inside the outlet hose. Since this infinitely increases liquid resistance of the outlet hose, almost no leakage current flows in the outlet hose. Consequently, the effect of self-discharge can be decreased.

The effect described above becomes significant when a variable power supply such as sunlight or wind power is used in the alkaline water electrolysis method according to the present embodiment.

The first embodiment, the second embodiment, and the third embodiment described above may be used in combination as appropriate.

EXAMPLES

The following describes the present disclosure in more detail through examples. However, the present disclosure is not in any way limited by the following examples.

Examples A and B and Comparative Examples A and B are described below.

(Example A1 and Comparative Example A1)

A bipolar element and an alkaline water electrolysis system in which the bipolar element was used were prepared as follows.

-Partition wall and outer frame-

An element including a partition wall partitioning an anode and a cathode and including an outer frame bordering the partition wall was used as a bipolar element. Those members in contact with electrolyte such as the partition wall and the frame of the bipolar element were all made of nickel.

-Anode-

An anode produced by using a nickel expanded metal substrate that had been subjected to blasting in advance and by spraying a granulated product of nickel oxide onto both sides of the conductive substrate by plasma spraying was used as the anode.

-Cathode-

A cathode having platinum supported on a conductive substrate formed by a plain weave mesh substrate obtained by knitting fine wires of nickel having a diameter of 0.15 mm with a mesh opening of 40 mesh was used.

-Membrane-

A coating liquid having the following composition was obtained using zirconium oxide (product name: EP Zirconium Oxide; produced by Daiichi Kigenso Kagaku Kogyo Co., Ltd.), N-methyl-2-pyrrolidone (produced by Wako Pure Chemical Industries, Ltd.), polysulfone (Udel® (Udel is a registered trademark in Japan, other countries, or both) produced by Solvay Advanced Polymers), and polyvinylpyrrolidone (produced by Wako Pure Chemical Industries, Ltd.; weight-average molecular weight (Mw): 900,000).
Polysulfone: 15 parts by mass
Polyvinylpyrrolidone: 6 parts by mass
N-Methyl-2-pyrrolidone: 70 parts by mass
Zirconium oxide: 45 parts by mass
The coating liquid was coated on both sides of a polyphenylene sulfide mesh (produced by Clever Co., Ltd.; thickness: 280 μm; mesh opening: 358 μm; fiber diameter: 150 μm) serving as a substrate. Immediately after the coating, the substrate coated with the coating liquid was exposed to vapor and was then immersed in a coagulation bath to form a coating film on the substrate surface. Thereafter, the coating film was thoroughly rinsed with pure water to obtain a porous membrane.

This porous membrane was taken to be a membrane A.

Cathode A was adjusted to a 50 cm square (length 50 cm × width 50 cm) by cutting to obtain a cathode sample A.

Anode A was adjusted to a 50 cm square (length 50 cm × width 50 cm) by cutting to obtain an anode sample A.

The membrane A was adjusted to a 52.5 cm square (length 52.5 cm × width 52.5 cm) by cutting to obtain a membrane sample A.

-Zero-gap structure-

Bipolar elements were stacked via a gasket holding a membrane and a bipolar electrolyzer was assembled to thereby press a cathode sample A and an anode sample A against the membrane from both sides, in contact therewith, and form a zero-gap structure.

Only the anode sample A was used at the anode side, whereas a cathode sample formed by a "cathode/conductive elastic body/current collector" combination was used at the cathode side.

The anode sample was the previously described anode sample.

The current collector was a nickel expanded metal substrate that had been subjected to blasting in advance. The substrate had a thickness of 1 mm and an open fraction of 54%.

A body obtained by weaving nickel wires of 0.15 mm in diameter and then performing corrugation to obtain a corrugation height of 5 mm was used as the conductive elastic body.

The conductive elastic body was fixed on the current collector by spot welding.

The cathode sample A was the previously described cathode sample.

-Bipolar electrolyzer and bipolar elements-

The bipolar electrolyzer was assembled using 49 bipolar elements by, as illustrated in FIG. 2, arranging a fast head, an insulating plate, and an anode terminal unit at one end, then arranging 49 groups each including an anode-side gasket portion, a membrane, a cathode-side gasket portion, and a bipolar element in this order, further arranging an anode-side gasket portion, a membrane, and a cathode-side gasket portion, arranging a cathode terminal unit, an insulating plate, and a loose head at the other end, and subsequently performing tightening from both the fast head side and the loose head side with a gasket sealing surface pressure of 2450 kN/m$^2$ to stack these components.

In this example, the bipolar electrolyzer had a 50-pair series connection structure in which there were 50 cathode compartments and 50 anode compartments.

-Gasket-

Each gasket was made of EPDM rubber, had an elastic modulus of 4.0 MPa under 100% deformation, and had a thickness of 4.0 mm. Dimensions of an opening in the gasket in plan view were the dimensions of an electrode compartment of an acrylic cell frame. Moreover, the gasket had a slit structure of 0.4 mm in thickness for holding a membrane upon insertion thereof at a thickness direction center part of an inner wall of the opening.

-Headers and conduits-

Bipolar elements 60 of an internal header 101 type were adopted.

As illustrated in FIGS. 4 and 5, each header 10 (anode inlet header 10Iai, cathode inlet header 10Ici, anode outlet header 10Iao, and cathode outlet header 10Ico) was disposed such as to extend in parallel to two side edges of the partition wall 1 of the bipolar element 60 (i.e., such as to extend in a direction perpendicular relative to an upper edge and a lower edge of the partition wall 1).

Moreover, as illustrated in FIGS. 4 and 5, each conduit 20 (anode distribution pipe 20Iai, cathode distribution pipe 20Ici, anode collection pipe 20Iao, and cathode collection pipe 20Ico) was disposed such as to extend in a direction perpendicular relative to the partition wall 1 of the bipolar element 60.

In this manner, an internal header 101 type electrolyzer was produced.

Electrolyte flowed into a cathode compartment 5c through the cathode inlet header 10Ici and flowed out from the cathode compartment 5c through the cathode outlet header 10Ico. Moreover, electrolyte flowed into an anode compartment 5a through the anode inlet header 10Iai and flowed out from the anode compartment 5a through the anode outlet header 10Ico.

As illustrated in FIG. 4, the cathode electrolyte inlet 5ci was connected at one end side of a lower edge of the outer frame having a rectangular shape in plan view and the cathode electrolyte outlet 5co was connected at an upper side of a side edge linked to the other end side of the lower edge of the outer frame 3 having a rectangular shape in plan view. The cathode electrolyte inlet 5ci and the cathode electrolyte outlet 5co were disposed such that they faced one another with a central part of the electrode compartment 5 interposed therebetween in the electrode compartment 5 having a rectangular shape in plan view. Electrolyte flowed from bottom to top in a diagonal direction relative to the vertical direction and rose along the electrode surface.

The bipolar electrolyzer 50 in the present example had a structure in which electrolyzer flowed into each anode compartment 5a or cathode compartment 5c from an electrolyte inlet 5i of the anode compartment 5a or cathode compartment 5c and in which electrolyte and produced gas were discharged from the electrolyzer 50 through an electrolyte outlet 5o of the anode compartment 5a or cathode compartment 5c.

Since electrolysis produced hydrogen gas in each of the cathode compartments 5c and oxygen gas in each of the anode compartments 5a, a mixed-phase flow of electrolyte and hydrogen gas arose at the cathode outlet header 10Ico and a mixed-phase flow of electrolyte and oxygen gas arose at the anode outlet header 10Ico.

-Gas-liquid separation tanks-

Gas-liquid separation tanks each having a height of 1,400 mm and a capacity of 1 m$^3$ were prepared.

The volume of liquid in each gas-liquid separation tank was about 50% of the design capacity.

In Example A1, hi was larger than hs, $\delta$ = 60 degrees, and 0 = 0 degree.

In Comparative Example A1, hi was smaller than hs, $\delta$ = 0 degree, and 0 = 0 degree.

Moreover, treatment for providing each of the gas-liquid separation tanks with a resin lining layer was performed in the same way as in Example B1 described further below. Details are shown in Table 1.

An alkaline water electrolysis system such as illustrated in FIG. 1 was prepared using components that are typically used in the relevant technical field for the feed pump, water replenisher, and so forth.

An alkaline water electrolysis method using this alkaline water electrolysis system was implemented under the conditions described below.

30% KOH aqueous solution was used as an electrolyte.

Current was passed through the bipolar electrolyzer from the rectifier such that the current density was 10 kA/m$^2$ relative to the area of the cathodes and anodes in the bipolar electrolyzer.

The feed pump was used to perform anode compartment-oxygen separation tank (gas-liquid separation tank for anodes)-anode compartment 1a circulation and to perform cathode compartment-hydrogen separation tank (gas-liquid separation tank for cathodes)-cathode compartment circulation.

The pressure inside the electrolyzer after starting to pass current was measured using a pressure gauge and was adjusted such that the cathode-side (hydrogen gas-side) pressure was 50 kPa and the anode-side (oxygen gas-side) pressure was 49 kPa. This pressure adjustment was performed using a control valve installed downstream of the pressure gauge.

In the circulation passages, 20A piping of SGP (carbon steel pipe for piping) subjected to inner surface Teflon lining was used for portions in contact with electrolyte.

(Electrolysis test)

Water electrolysis was performed by continuously passing current through the electrolyzer from the rectifier such that the current density was 10 kA/m$^2$. Operation was continued for 100 hours under each set of conditions and evaluations were made once 80 hours had elapsed.

In each example, a value for the oxygen concentration (%) in hydrogen obtained by water electrolysis was measured by gas chromatography. A lower oxygen concentration in hydrogen indicates higher hydrogen purity, and thus indicates that better quality hydrogen has been obtained.

The results are recorded in Table 1.

(Example A2, Example A3, and Comparative Example A2)

A bipolar element and an alkaline water electrolysis system in which the bipolar element was used were prepared as follows.

-Partition wall, outer frame, and distributors-

A nickel member in which a partition wall partitioning an anode and a cathode and an outer frame bordering the partition wall had a unified structure was used as a bipolar element. The partition wall had a size of 500 mm in length by 500 mm in width in plan view and had a thickness of 2 mm.

Four nickel anode-side distributors (anode-side ribs) of 25 mm in height and 1.5 mm in thickness were attached by welding at the anode compartment-side of the partition wall at intervals of 95 mm (outer frame-distributor distance: 95.5 mm) and four nickel cathode-side distributors (cathode-side ribs) of 25 mm in height and 1.5 mm in thickness were attached by welding at the cathode compartment-side of the partition wall at intervals of 95 mm (outer frame-distributor distance: 95.5 mm).

At the side of each of the distributors that was welded to the partition wall, semicircular holes having a radius of 10 mm were provided at 12 locations at equal spacing in an extension direction of the distributor.

-Anode, cathode, membrane, and gasket-

The same anode, cathode, membrane, and gasket as used in Example 1 were used.

The anode and the cathode each had a size of 500 mm $\times$ 500 mm in plan view.

-Bipolar electrolyzer and bipolar elements-

The bipolar electrolyzer was assembled using 5 bipolar elements by, as illustrated in FIG. 2, arranging a fast head, an insulating plate, and an anode terminal unit at one end, then arranging 5 groups each including an anode-side gasket portion, a membrane, a cathode-side gasket portion, and a bipolar element in this order, further arranging an anode-side gasket portion, a membrane, and a cathode-side gasket portion, arranging a cathode terminal unit, an insulating plate, and a loose head at the other end, and subsequently performing tightening from both the fast head side and the loose head side using 8 tie rods by tightening each of the tie rods using a torque wrench with a tightening torque of 59 Nm to stack these components.

In this example, the bipolar electrolyzer had a 5-pair series connection structure in which there were 5 cathode compartments and 5 anode compartments.

The zero-gap bipolar elements each had a rectangular shape of 540 mm in length by 620 mm in width as viewed in a direction perpendicular to the partition wall.

-Electrolysis compartments-

The electrode compartment length in a direction perpendicular to the partition wall (i.e., the electrode compartment depth) was 25 mm for the anode compartment and 25 mm for the cathode compartment.

-Zero-gap structure-

Through assembly of the bipolar electrolyzer as described above, the cathode and the anode were pressed against the membrane from both sides and were in contact therewith to form a zero-gap structure.

Only the anode was used at the anode side, whereas a "cathode/conductive elastic body/current collector" combination was used at the cathode side. Details pertaining to the zero-gap structure were the same as in Example 1.

-Header (external header)-

In the bipolar electrolyzer 50 of the present example, conduits 20 (anode distribution pipe 20Oai, cathode distribution pipe 20Oci, anode collection pipe 20Oao, and cathode collection pipe 20Oco) for distributing and collecting electrolyte were disposed outside a casing of the electrolyzer 50 as illustrated in FIGS. 6 and 7.

Further, hoses (anode inlet-side hose 10Oai, anode outlet-side hose 10Oao, cathode inlet-side hose 10Oci, and cathode outlet-side hose 10Oco) for passing electrolyte into the electrolysis compartments 5 from these conduits 20 were externally attached to the electrolyzer 50.

Note that a thermocouple was installed in each of these hoses (10Oai, 10Oao, 10Oci, and 10Oco) in order to measure the temperature difference of electrolyte between before and after passing through the electrode compartments.

In this manner, an external header type electrolyzer was produced.

Electrolyte flowed into a cathode compartment 5c through the cathode inlet-side hose 10Oci and flowed out from the cathode compartment 5c through the cathode outlet-side hose 10Oco.

Moreover, electrolyte flowed into an anode compartment 5a through the anode inlet-side hose 10Oai and flowed out from the anode compartment 5a through the anode outlet-side hose 10Oao.

As illustrated in FIGS. 6 and 7, the inlet-side hose was connected at one end side of a lower edge of the outer frame having a rectangular shape in plan view and the outlet-side hose was connected at an upper side of a side edge linked to the other end side of the lower edge of the outer frame having a rectangular shape in plan view. The inlet-side hose and the outlet-side hose were disposed such as to face one another with a central part of the electrode compartment interposed therebetween in the electrode compartment having a rectangular shape in plan view. Electrolyte flowed from bottom to top in a diagonal direction relative to the vertical direction and rose along the electrode surface.

The bipolar electrolyzer in the present example had a structure in which electrolyte flowed into each anode compartment 5a or cathode compartment 5c through an inlet-side hose of the anode compartment 5a or cathode compartment 5c and in which electrolyte and produced gas were discharged from the electrolyzer through an outlet-side hose of the anode compartment 5a or cathode compartment 5c.

Since electrolysis produced hydrogen gas in each of the cathode compartments 5c and oxygen gas in each of the anode compartments 5a, a mixed-phase flow of electrolyte and hydrogen gas arose in the cathode outlet-side hose 10Oco and a mixed-phase flow of electrolyte and oxygen gas arose in the anode outlet-side hose 10Oao.

A KCA2F7-15-2500CL produced by Sansha Electric Manufacturing Co., Ltd. was used as a rectifier.

A GPR-2500 produced by Advanced Instruments, Inc. was used as an oxygen concentration meter.

An SD-D58 AC produced by Riken Keiki Co., Ltd. was used as a hydrogen concentration meter.

An EJA-118W produced by Yokogawa Electric Corporation was used as a pressure gauge.

An alkaline water electrolysis system was prepared using components that are typically used in the relevant technical field for the feed pump, gas-liquid separation tanks, water replenisher, and so forth (refer to FIG. 1).

-Gas-liquid separation tanks-

Gas-liquid separation tanks each having a height of 1,400 mm and a capacity of 1 m$^3$ were prepared.

The volume of liquid in each gas-liquid separation tank was about 50% of the design capacity.

In Example A2, hi was larger than hs, $\delta$ = 60 degrees, and 0 = 0 degree.

In Comparative Example A2, hi was smaller than hs, $\delta$ = 0 degree, and 0 = 0 degree.

In Example A3, hi was larger than hs, $\delta$ = 70 degrees, and 0 = 90 degrees.

Moreover, treatment for providing each of the gas-liquid separation tanks with a resin lining layer was performed in the same way as in Example B1 described further below. Details are shown in Table 1.

Alkaline water electrolysis was implemented using the bipolar electrolyzer under the conditions described below.

30% KOH aqueous solution was used as an electrolyte.

Current was passed through the bipolar electrolyzer from the rectifier such that the current density was 10 kA/m$^2$ relative to the area of cathodes and anodes in the bipolar electrolyzer.

The feed pump was used to perform anode compartment-oxygen separation tank (gas-liquid separation tank for anodes)-anode compartment circulation and to perform cathode compartment-hydrogen separation tank (gas-liquid separation tank for cathodes)-cathode compartment circulation.

The pressure inside the electrolyzer after starting to pass current was measured using a pressure gauge and was adjusted such that the cathode-side (hydrogen gas-side) pressure was 50 kPa and the anode-side (oxygen gas-side) pressure was 49 kPa. This pressure adjustment was performed using a control valve installed downstream of the pressure gauge.

In the circulation passages, 20A piping of SGP (carbon steel pipe for piping) subjected to inner surface Teflon lining was used for portions in contact with electrolyte.

(Electrolysis test)

Water electrolysis was performed by continuously passing current through the electrolyzer from the rectifier such that the current density was 10 kA/m$^2$. Operation was continued for 100 hours under each set of conditions and evaluations were made once 80 hours had elapsed.

In each example, a value for the oxygen concentration in hydrogen obtained by water electrolysis was measured by gas chromatography. A lower oxygen concentration (%) in hydrogen indicates higher hydrogen purity, and thus indicates that better quality hydrogen has been obtained.

The results are recorded in Table 1.

Table 1

| | | | Units | Comparative Example A1 | Example A1 | Comparative Example A2 | Example A2 | Example A3 |
|---|---|---|---|---|---|---|---|---|
| Water electrolysis system | | Header | - | Internal | Internal | External | External | External |
| | | hi | - | 0.35H | 0.65 H | 0.35H | 0.65H | 0.7H |
| | | hs | - | 0.5H | 0.5H | 0.5H | 0.5H | 0.5H |
| | | δ | degrees | 0 | 60 | 0 | 60 | 70 |
| | | θ | degrees | 0 | 0 | 0 | 0 | 90 |
| | | Tank material | - | SS400 | SS400 | SS400 | SS400 | SS400 |
| | | Blasting | - | Yes | Yes | Yes | Yes | Yes |
| | | Processing method | - | Coating | Coating | Coating | Coating | Rotary |
| | | Primer treatment | - | Yes (ETFE copolymer) | Yes (ETFE copolymer) | Yes (ETFE copolymer) | Yes (ETFE copolymer) | No |
| | | Resin lining layer Main material | - | ETFE (one layer) | PFA (one layer) | ETFE (one layer) | ETFE (one layer) | ETFE (two layers) |
| | | Thickness | mm | 2 mm | 2 mm | 2 mm | 2 mm | 1 mm × two layers |
| | | Thickness standard deviation | mm | 0.5 | 0.5 | 0.5 | 0.5 | 0.5 |
| | | material Heat insulating material | - | No | No | No | No | No |
| Water electrolysis method | | Electrolyte temperature | °C | 95°C (maximum) | 60°C to 80°C | 95°C (maximum) | 95°C (maximum) | 95°C (maximum) |
| | | Electrolyte | - | 30% KOH aq | 30% KOH aq | 30% KOH aq | 30% KOH aq | 30% KOH aq |
| | | Current density | kA/m$^{-2}$ | 10 | 10 | 10 | 10 | 6 |
| | | Operating time | hr | 2000 | 2000 | 2000 | 2000 | 7000 |
| Evaluation | Electrolysis test | Oxygen concentration in hydrogen | % | 0.15 | 0.08 | 0.1 | 0.05 | 0.02 |

(Example B1)

The overall configuration of an alkaline water electrolysis system was the same as in Example A1 with the exception of particularly the following conditions.

The electrode area of each electrolyte in the bipolar electrolyzer was 2.7 $m^2$, and the bipolar electrolyzer had a 4-pair series connection structure including 4 cathode compartments and 4 anode compartments.

The surface of a tank made of SS400 steel was degreased and was subsequently roughened through blasting with sand. A first layer of ETFE (thickness: 1 mm) was coated by rotary baking. Thereafter, a second layer of ETFE (thickness: 1 mm) was coated in the same manner by rotary baking.

Tanks obtained in this manner were used as gas-liquid separation tanks (hydrogen separation tank and oxygen separation tank) for alkaline water electrolysis.

The capacity of both the hydrogen separation tank and the oxygen separation tank was 2 $m^3$.

Detailed conditions of the alkaline water electrolysis system are shown in Table 1.

30% potassium hydroxide was used as an electrolyte.

Current was passed through the bipolar electrolyzer from the rectifier such that the current density was 6 kA/$m^2$ relative to the area of cathodes and anodes in the bipolar electrolyzer.

The circulation flow rate was set as 1 $m^3$/hr.

The maximum temperature of the electrolyte was 95°C.

When the system was operated for a cumulative time of 7,000 hours under these conditions, lining layer peeling did not occur and 25 $Nm^3$/hr of hydrogen could be obtained by water electrolysis.

(Example B2)

The overall configuration of an alkaline water electrolysis system was the same as in Example A1 with the exception of particularly the following conditions.

The electrode area of each electrolyte in the bipolar electrolyzer was 2.7 $m^2$, and the bipolar electrolyzer had a 4-pair series connection structure including 4 cathode compartments and 4 anode compartments.

The surface of a tank made of SS400 steel was degreased and was subsequently roughened through blasting with sand. A first layer of ETFE (thickness: 1 mm) was coated by powder coating. Thereafter, a second layer of ETFE (thickness: 1 mm) was coated in the same manner by powder coating.

Tanks obtained in this manner were used as gas-liquid separation tanks (hydrogen separation tank and oxygen separation tank) for alkaline water electrolysis.

The capacity of both the hydrogen separation tank and the oxygen separation tank was 2 $m^3$.

Detailed conditions of the alkaline water electrolysis system are shown in Table 1.

30% potassium hydroxide was used as an electrolyte.

Current was passed through the bipolar electrolyzer from the rectifier such that the current density was 6 kA/$m^2$ relative to the area of cathodes and anodes in the bipolar electrolyzer.

The circulation flow rate was set as 1 $m^3$/hr.

The maximum temperature of the electrolyte was 95°C.

When the system was operated for a cumulative time of 7,000 hours under these conditions, lining layer peeling did not occur and 25 $Nm^3$/hr of hydrogen could be obtained by water electrolysis.

(Example B3)

The overall configuration of an alkaline water electrolysis system was the same as in Example A1 with the exception of particularly the following conditions.

The electrode area of each electrolyte in the bipolar electrolyzer was 0.25 $m^2$, and the bipolar electrolyzer had a 4-pair series connection structure including 4 cathode compartments and 4 anode compartments.

The surface of a tank made of SS400 steel was degreased and was subsequently roughened by blasting using sand. In a primer, ETFE copolymer was coated and then one layer (thickness: 2 mm) having PFA as a main material was coated thereon.

Tanks obtained in this manner were used as gas-liquid separation tanks (hydrogen separation tank and oxygen separation tank) for alkaline water electrolysis.

The capacity of both the hydrogen separation tank and the oxygen separation tank was 0.3 $m^3$.

Detailed conditions of the alkaline water electrolysis system are shown in Table 1.

30% potassium hydroxide was used as an electrolyte.

Current was passed through the bipolar electrolyzer from the rectifier such that the current density was 10 kA/$m^2$ relative to the area of cathodes and anodes in the bipolar electrolyzer.

The circulation flow rate was set as 0.1 m$^3$/hr.

The maximum temperature of the electrolyte was 80°C.

When the system was operated for a cumulative time of 2,000 hours under these conditions, lining layer peeling did not occur and 4.2 Nm$^3$/hr of hydrogen could be obtained by water electrolysis.

(Example B4)

The overall configuration of an alkaline water electrolysis system was the same as in Example A1 with the exception of particularly the following conditions.

The electrode area of each electrolyte in the bipolar electrolyzer was 0.25 m$^2$, and the bipolar electrolyzer had a 40-pair series connection structure including 40 cathode compartments and 40 anode compartments.

The surface of a tank made of SS400 steel was degreased and was subsequently roughened by blasting with sand. In a primer, ETFE copolymer was applied and then one layer (thickness: 2 mm) having ETFE as a main material was applied thereon.

Tanks obtained in this manner were used as gas-liquid separation tanks (hydrogen separation tank and oxygen separation tank) for alkaline water electrolysis.

The capacity of both the hydrogen separation tank and the oxygen separation tank was 0.5 m$^3$.

Detailed conditions of the alkaline water electrolysis system are shown in Table 1.

30% potassium hydroxide was used as an electrolyte.

Current was passed through the bipolar electrolyzer from the rectifier such that the current density was 6 kA/m$^2$ relative to the area of cathodes and anodes in the bipolar electrolyzer.

The circulation flow rate was set as 1 m$^3$/hr.

The maximum temperature of the electrolyte was 70°C.

When the system was operated for a cumulative time of 1,000 hours under these conditions, lining layer peeling did not occur and 16 Nm$^3$/hr of hydrogen could be obtained by water electrolysis.

(Example B5)

The overall configuration of an alkaline water electrolysis system was the same as in Example A2 with the exception of particularly the following conditions.

The electrode area of each electrolyte in the bipolar electrolyzer was 0.25 m$^2$, and the bipolar electrolyzer had a 10-pair series connection structure including 10 cathode compartments and 10 anode compartments.

The surface of a tank made of SS400 steel was degreased and was subsequently roughened by blasting with sand. In a primer, ETFE copolymer was applied and then one layer (thickness: 2 mm) having ETFE as a main material was applied thereon.

Tanks obtained in this manner were used as gas-liquid separation tanks (hydrogen separation tank and oxygen separation tank) for alkaline water electrolysis.

The capacity of both the hydrogen separation tank and the oxygen separation tank was 0.5 m$^3$.

Detailed conditions of the alkaline water electrolysis system are shown in Table 1.

30% potassium hydroxide was used as an electrolyte.

Current was passed through the bipolar electrolyzer from the rectifier such that the current density was 10 kA/m$^2$ relative to the area of cathodes and anodes in the bipolar electrolyzer.

The circulation flow rate was set as 0.2 m$^3$/hr.

The maximum temperature of the electrolyte was 95°C.

When the system was operated for a cumulative time of 2,000 hours under these conditions, lining layer peeling did not occur and 10 Nm$^3$/hr of hydrogen could be obtained by water electrolysis.

Table 2

| | | | Units | Example B1 | Example B2 | Example B3 | Example B4 | Example B5 |
|---|---|---|---|---|---|---|---|---|
| Water electrolysis system | | Header | - | Internal | Internal | Internal | Internal | External |
| | | hi | - | 0.7H | 0.7H | 0.65H | 0.8H | 0.65H |
| | | hs | - | 0.5H | 0.5H | 0.5H | 0.35H | 0.5H |
| | | δ | degrees | 70 | 70 | 60 | 45 | 60 |
| | | θ | degrees | 90 | 90 | 0 | 45 | 0 |
| | | Tank material | - | SS400 | SS400 | SS400 | SS400 | SS400 |
| | | Blasting | - | Yes | Yes | Yes | Yes | Yes |
| | | Processing method | - | Rotary | Coating | Coating | Coating | Coating |
| | | Primer treatment | - | No | No | Yes (ETFE copolymer) | Yes (ETFE copolymer) | Yes (ETFE copolymer) |
| | | Resin lining layer Main material | - | ETFE (two layers) | ETFE (two layers) | PFA (one layer) | ETFE (one layer) | ETFE (one layer) |
| | | Thickness | mm | 1 mm × two layers | 1 mm × two layers | 2 mm | 2 mm | 2 mm |
| | | Thickness standard deviation | mm | 0.5 | 0.5 | 0.5 | 0.5 | 0.5 |
| | | Heat insulating material | - | No | No | No | No | No |
| Water electrolysis method | | Electrolyte temperature | °C | 95°C (maximum) | 95°C (maximum) | 60°C to 80°C | 70°C (maximum) | 95°C (maximum) |
| | | Electrolyte | - | 30% KOH aq | 30% KOH aq | 30% KOH aq | 30% KOH aq | 30% KOH aq |
| | | Current density | kA/m$^2$ | 6 | 6 | 10 | 6 | 10 |
| | | Operating time | hr | 7000 | 7000 | 2000 | 1000 | 2000 |
| Evaluation | Electrolysis test | Oxygen concentration in hydrogen | % | 0.04 | 0.05 | 0.08 | 0.08 | 0.02 |

The following describes Examples C and Comparative Examples C.

(Example C1)

A bipolar element was prepared as follows. Note that some of the components used to prepare an electrolysis device are also described.
The partition wall, outer frame, anode, cathode, membrane, zero-gap structure, and so forth were the same as those used in Example A1 unless otherwise specified.

-Headers and conduits-

A bipolar element 60 of an internal header 101 type was adopted.
As illustrated in FIGS. 4 and 5, each header 10 (anode inlet header 10ai, cathode inlet header 10ci, anode outlet header 10ao, and cathode outlet header 10co) was disposed such as to extend in parallel to two side edges of a partition wall 1 of the bipolar element 60 (i.e., such as to extend in a direction perpendicular relative to an upper edge and a lower edge of the partition wall 1).
Moreover, as illustrated in FIGS. 4 and 5, each conduit 20 (anode distribution pipe 20ai, cathode distribution pipe 20ci, anode collection pipe 20ao, and cathode collection pipe 20co) was disposed such as to extend in a direction perpendicular relative to the partition wall 1 of the bipolar element 60.
In this manner, an internal header 101 type electrolyzer was produced.
Electrolyte flowed into a cathode compartment 5c through the cathode inlet header 0Ici and flowed out from the cathode compartment 5c through the cathode outlet header lOco. Moreover, electrolyte flowed into an anode compartment 5a through the anode inlet header 10ai and flowed out from the anode compartment 5a through the anode outlet header lOco.
As illustrated in FIG. 4, a cathode electrolyte inlet 5ci was connected at one end side of a lower edge of an outer frame having a rectangular shape in plan view and a cathode electrolyte outlet 5co was connected at an upper side of a side edge linked to the other end side of the lower edge of the outer frame 3 having a rectangular shape in plan view. The cathode electrolyte inlet 5ci and the cathode electrolyte outlet 5co were disposed such as to face one another with a central part of the electrode compartment 5 interposed therebetween in the electrode compartment 5 having a rectangular shape in plan view. Electrolyte flowed from bottom to top in a diagonal direction relative to the vertical direction and rose along the electrode surface.
The bipolar electrolyzer 50 in the present example had a structure in which electrolyte flowed into each anode compartment 5a or cathode compartment 5c from an electrolyte inlet 5i of the anode compartment 5a or cathode compartment 5c and in which electrolyte and produced gas were discharged from the electrolyzer 50 through an electrolyte outlet 5o of the anode compartment 5a or cathode compartment 5c.
Since electrolysis produced hydrogen gas in each of the cathode compartments 5c and oxygen gas in each of the anode compartments 5a, a mixed-phase flow of electrolyte and hydrogen gas arose at the cathode outlet header lOco and a mixed-phase flow of electrolyte and oxygen gas arose at the anode outlet header lOco.
The bipolar electrolyzer in Example C1 was prepared by the following procedure.
An element obtained by attaching a cathode A to a cathode surface of a bipolar frame and attaching an anode A to an anode surface of the bipolar frame was used as a bipolar element. Moreover, an element obtained by attaching a cathode A to a cathode terminal frame was used as a cathode terminal element. Further, an element obtained by attaching an anode A to an anode terminal frame was used as an anode terminal element.
The area S1 of electrodes (anode and cathode) attached in the bipolar element was adjusted to 0.25 $m^2$.
The cross-sectional area S2 of a passage of each conduit (distribution pipe or collection pipe) disposed at the bottom of the outer frame was adjusted to 0.0009 $m^2$.
The cross-sectional area S3 of a passage of each header (anode inlet header, anode outlet header, cathode inlet header, or cathode outlet header) was adjusted to 0.000016 $m^2$.
The thickness d of the bipolar element was adjusted to 0.033 m. The thickness of the cathode terminal element and the thickness of the anode terminal element were adjusted to 0.0125 m.
Nine bipolar elements such as described above were prepared. Moreover, one each of the cathode terminal element and the anode terminal element described above were prepared.
Gaskets were adhered to metal frame parts of all of the bipolar elements, the cathode terminal element, and the anode terminal element.
One membrane A was sandwiched between the anode terminal element and a cathode side of a bipolar element. The nine bipolar elements were arranged in series such that the anode side of one element among adjacent bipolar elements was in opposition to the cathode side of the other element. Moreover, one membrane A was sandwiched between each pair of adjacent bipolar elements (i.e., eight membranes A in total), and the cathode and the anode were pressed against the membrane to form a zero-gap structure. One membrane A was also sandwiched between the anode side of the 9th bipolar element and the cathode terminal element. A fast head, an insulating plate, and a loose head were also used, and these components were tightened using a press to obtain the bipolar electrolyzer of Example C1.

An alkaline water electrolysis system such as illustrated in FIG. 1 was prepared using components that are typically used in the relevant technical field for the feed pump, gas-liquid separation tanks, and so forth. Note that an anode thermometer was provided in anode electrolyte returning piping, a cathode thermometer was provided in cathode electrolyte returning piping, and electrolyte concentration was measured in each piping. Moreover, pressure gauges were provided in front of the electrolyte distribution pipe inlets of the anode and the cathode in electrolyte feeding piping (i.e., downstream relative to the flow meters), and the pressure of electrolyte at each of the electrolyte distribution pipe inlets was measured.

An alkaline water electrolysis method using the alkaline water electrolysis system was implemented under the conditions described below.

30% KOH aqueous solution was used as an electrolyte.

The feed pump was used to perform anode compartment-anode electrolyte returning piping-oxygen separation tank (gas-liquid separation tank for anodes)-anode electrolyte feeding piping-anode compartment circulation and to perform cathode compartment-cathode electrolyte returning piping-hydrogen separation tank (gas-liquid separation tank for cathodes)-cathode electrolyte feeding piping-cathode compartment circulation. The feed pump was stopped before starting to pass current to the electrolyzer and electrolyte was circulated without using the feed pump.

In the circulation passages, 20A piping of SGP (carbon steel pipe for piping) subjected to inner surface Teflon lining was used for portions in contact with electrolyte.

The same tanks as used in Example A2 were prepared as gas-liquid separation tanks.

Current was passed through the bipolar electrolyzer from the rectifier while being varied in the form of a sine wave with a variation period of 30 seconds and a variation range of 0 kA/m$^2$ to 10 kA/m$^2$ relative to the area of each cathode and anode. Since the electrode area in Example C1 was 500 mm $\times$ 500 mm, a current of 0 kA to 2.5 kA was passed.

Electrolysis was performed while measuring pressure inside the electrolyzer using the pressure gauges 78 disposed downstream of gas outflow paths from the gas-liquid separation tanks and adjusting the pressure such that the cathode-side pressure was 50 kPa and the anode-side pressure was 50 kPa. The pressure adjustment was carried out through the pressure control valves 80 installed downstream of the pressure gauges 78.

The vertical direction distance H between a lowest vertical direction position of an electrolyte distribution pipe inlet of the bipolar electrolyzer and the liquid surface of electrolyte in a gas-liquid separation tank was adjusted to 2 m, the vertical direction distance ha between the liquid surface of electrolyte in the oxygen separation tank and a highest vertical direction position of anode electrolyte returning piping for feeding electrolyte to the oxygen separation tank from the bipolar electrolyzer was adjusted to 0.9 m, and the vertical direction distance hc between the liquid surface of electrolyte in the hydrogen separation tank and a highest vertical direction position of cathode electrolyte returning piping for feeding electrolyte to the hydrogen separation tank from the bipolar electrolyzer was adjusted to 0.9 m.

A unified type alkaline water electrolysis system in which the oxygen separation tank and the hydrogen separation tank were in contact with the bipolar electrolyzer was adopted.

Alkaline water electrolysis in Example C1 was evaluated as follows.

(Electrolyte temperature)

The anode thermometer disposed in the anode electrolyte returning piping and the cathode thermometer disposed in the cathode electrolyte returning piping were used to measure the temperature (°C) of electrolyte transported from electrolyte collection pipe outlets of the bipolar electrolyzer 100 hours after starting to pass a current.

The results are shown in Table 3.

(Amplitude of electrolyte pressure difference of electrolyte distribution pipe inlets of cathode and anode)

The pressure (kPa) of anode electrolyte flowing into an electrolyte distribution pipe inlet at the anode side and the pressure (kPa) of cathode electrolyte flowing into an electrolyte distribution pipe inlet at the cathode side were measured 100 hours after starting to pass a current, and the amplitude of a difference between the anode electrolyte pressure and the cathode electrolyte pressure was measured.

A small amplitude of difference between the anode electrolyte pressure and the cathode electrolyte pressure is preferable because this means that less mixing of gas occurs through the membranes and that damage to the membranes and electrodes can be reduced.

(Purity of collected gas)

The concentrations of oxygen gas and hydrogen gas in oxygen gas collected from the oxygen separation tank were measured 100 hours after starting to pass a current. The proportion of hydrogen gas contained relative to the total amount of collected oxygen gas was calculated (hydrogen gas concentration/(oxygen gas concentration + hydrogen gas concentration) $\times$ 100). Moreover, the concentrations of hydrogen gas and oxygen gas in hydrogen gas collected from the hydrogen separation tank were measured, and the proportion of oxygen gas contained relative to the total amount of collected hydrogen gas was calculated (oxygen gas concentration/(hydrogen gas concentration + oxygen gas concentration) $\times$ 100).

Gas concentrations were measured using $H_2/O_2$ concentration meters 75/76 disposed downstream of the pressure control valves 80 as illustrated in FIG. 1.

A smaller percentage content of other gas was judged to indicate that gas having better purity was obtained.

(Bubble fraction of electrolyte inside bipolar electrolyzer, B)

A transparent electrolyzer and piping lines having the same dimensions as in Examples C and Comparative Examples C were prepared. Electrolysis was performed for 1 hour with a constant current density and was then stopped. The volume fraction of bubbles in electrolyte (bubble volume/(liquid volume + bubble volume)) was measured through the change in volume of electrolyte between before and after stopping electrolysis. The volume fraction of bubbles was approximately 10% for 6 kA/m$^2$ and was approximately 15% for 10 kA/m$^2$.

(Example C2)

An alkaline water electrolysis system was prepared in the same way as in Example C1 with the exception that the oxygen separation tank and the bipolar electrolyzer were separated by 1.0 m, the hydrogen separation tank and the bipolar electrolyzer were separated by 1.0 m, and the oxygen separation tank and the hydrogen separation tank were connected to the bipolar electrolyzer by electrolyte returning piping and electrolyte feeding piping of approximately 2 m.

The measurement results are shown in Table 3.

(Example C3)

An alkaline water electrolysis system was prepared in the same way as in Example C2 with the exception that ha and hc were set as 0.5 m.

The measurement results are shown in Table 3.

(Example C4)

An alkaline water electrolysis system was prepared in the same way as in Example C2 with the exception that ha and hc were set as 0.1 m.

The measurement results are shown in Table 3.

(Example C5)

An alkaline water electrolysis system was prepared in the same way as in Example C2 with the exception that ha was set as 0.7 m and hc was set as 0.9 m.

The measurement results are shown in Table 3.

(Example C6)

An alkaline water electrolysis system was prepared in the same way as in Example C2 with the exception that ha was set as 0.9 m and hc was set as 0.7 m.

The measurement results are shown in Table 3.

(Comparative Example C1)

An alkaline water electrolysis system was prepared in the same way as in Example C2 with the exception that ha and hc were set as 1.1 m.

The measurement results are shown in Table 3.

(Comparative Example C2)

An alkaline water electrolysis system was prepared in the same way as in Example C2 with the exception that ha and hc were set as 0.01 m.

The measurement results are shown in Table 3.

Table 3

| | | | Example C1 | Example C2 | Example C3 | Example C4 | Example C5 | Example C6 | Comparative Example C1 | Comparative Example C2 |
|---|---|---|---|---|---|---|---|---|---|---|
| Alkaline water electrolysis system | Vertical direction distance between lowest vertical direction position of electrolyte distribution pipe inlet and electrolyte liquid surface in gas-liquid separation tank H | m | 2 | 2 | 2 | 2 | 2 | 2 | 2 | 2 |
| | Vertical direction distance between electrolyte liquid surface in anode-side gas-liquid separation tank and highest vertical direction position of anode electrolyte returning piping ha | m | 0.9 | 0.9 | 0.5 | 0.1 | 0.7 | 0.9 | 1.1 | 0.01 |
| | Vertical direction distance between electrolyte liquid surface in cathode-side gas-liquid separation tank and highest vertical direction position of cathode electrolyte returning piping hc | m | 0.9 | 0.9 | 0.5 | 0.1 | 0.9 | 0.7 | 1.1 | 0.01 |
| | Installation configuration of gas-liquid separation tanks and bipolar electrolyzer | - | Unified | Separated | Separated | Separated | Separated | Separated | Separated | Separated |

(continued)

| | | | Example C1 | Example C2 | Example C3 | Example C4 | Example C5 | Example C6 | Comparative Example C1 | Comparative Example C2 |
|---|---|---|---|---|---|---|---|---|---|---|
| Evaluation | Amplitude of electrolyte pressure difference between electrolyte distribution pipe inlets of cathode and anode | kPa | 2.2 | 2.2 | 3.1 | 3.2 | 1 | 4.2 | 1.5 | 3.9 |
| | Electrolyte temperature | Electrolyte temperature at anode electrolyte collection pipe outlet | °C | 80 | 83 | 80 | 79 | 78 | 83 | 92 | 78 |
| | | Electrolyte temperature at cathode electrolyte collection pipe outlet | °C | 80 | 83 | 80 | 79 | 83 | 78 | 92 | 78 |
| | Collected gas purity | Proportion of hydrogen gas contained relative to total amount of collected oxygen gas | % | 1 | 0.01 | 0.02 | 0.05 | 0.01 | 0.05 | 0.001 | 2.1 |
| | | Proportion of oxygen gas contained relative to total amount of collected hydrogen gas | % | 0.9 | 0.01 | 0.02 | 0.05 | 0.01 | 0.1 | 0.001 | 2.2 |

In the alkaline water electrolysis system of Example C1, the electrolyte temperature at the electrolyte collection pipe outlet was 90°C or lower for both the anode and the cathode and was within the permissible range, and thus the alkaline water electrolysis system of Example C1 could limit this temperature to a low value. Moreover, gas purity was low.

The electrolyte temperature at the electrolyte collection pipe outlet was 90°C or lower for both the anode and the cathode in Examples C2 to C6 and was within the permissible range, and thus Examples C2 to C6 could limit this temperature to a low value. Moreover, gas purity was significantly improved compared to Example C1.

In Example C6, the amplitude of circulating liquid pressure difference for the electrolyte distribution pipe inlets of the cathode and the anode was significantly improved.

On the other hand, the electrolyte temperature at the electrolyte collection pipe outlet was high in Comparative Example C1 and the gas purity was high in Comparative Example C2.

The following describes Examples D and Comparative Examples D.

(Example D1)

A bipolar cell for alkaline water electrolysis and an alkaline water electrolysis system in which the bipolar cell was used were prepared as follows.

The partition wall, outer frame, anode, cathode, membrane, zero-gap structure, gasket, and so forth were the same as those used in Example A1 unless otherwise specified.

-Bipolar electrolyzer and bipolar elements-

A bipolar electrolyzer was assembled using 5 bipolar elements by, as illustrated in FIG. 2, arranging a fast head, an insulating plate, and an anode terminal element at one end, then arranging 5 groups each including an anode-side gasket portion, a membrane, a cathode-side gasket portion, and a bipolar element in this order, further arranging an anode-side gasket portion, a membrane, and a cathode-side gasket portion, arranging a cathode terminal element, an insulating plate, and a loose head at the other end, and subsequently performing tightening from both the fast head side and the loose head side using 8 tie rods by tightening each of the tie rods using a torque wrench with a tightening torque of 59 Nm to stack these components.

In this example, the bipolar electrolyzer had a 5-pair series connection structure in which there were 5 cathode compartments and 5 anode compartments.

-Electrolysis compartments-

The electrode compartment length in a direction perpendicular to the partition wall (i.e., the electrode compartment depth) was 25 mm for the anode compartment and 25 mm for the cathode compartment.

-Header (external header)-

In the bipolar electrolyzer 50 of the present example, conduits 20 (anode distribution pipe 20Oai, cathode distribution pipe 20Oci, anode collection pipe 20Oao, and cathode collection pipe 20Oco) for distributing and collecting electrolyte were disposed outside a casing of the electrolyzer 50 as illustrated in FIGS. 6 and 7.

Moreover, hoses (anode inlet-side hose 10Oai, anode outlet-side hose 10Oao, cathode inlet-side hose 10Oci, and cathode outlet-side hose 10Oco) for passing electrolyte from these conduits 20 to the electrolysis compartments 5 were externally attached to the electrolyzer 50.

Note that a thermocouple was installed in each of these hoses (10Oai, 10Oao, 10Oci, and 10Oco) in order to measure the temperature difference of electrolyte between before and after passing through the electrode compartments.

In this manner, an external header type electrolyzer was produced.

Electrolyte flowed into a cathode compartment 5c through the cathode inlet-side hose 10Oci and flowed out from the cathode compartment 5c through the cathode outlet-side hose 10Oco.

Moreover, electrolyte flowed into an anode compartment 5a through the anode inlet-side hose 10Oai and flowed out from the anode compartment 5a through the anode outlet-side hose 10Oao.

As illustrated in FIGS. 6 and 7, the inlet-side hose was connected at one end side of a lower edge of the outer frame having a rectangular shape in plan view and the outlet-side hose was connected at an upper side of a side edge linked to the other end side of the lower edge of the outer frame having a rectangular shape in plan view. The inlet-side hose and the outlet-side hose were disposed such as to face one another with a central part of the electrode compartment interposed therebetween in the electrode compartment having a rectangular shape in plan view. Electrolyte flowed from bottom to top in a diagonal direction relative to the vertical direction and rose along the electrode surface.

The bipolar electrolyzer in the present example had a structure in which electrolyte flowed into each anode compartment 5a or cathode compartment 5c through an inlet-side hose of the anode compartment 5a or cathode compartment 5c and in which electrolyte and produced gas were discharged from the electrolyzer through an outlet-side hose of the anode compartment 5a or cathode compartment 5c.

Since electrolysis produced hydrogen gas in each of the cathode compartments 5c and oxygen gas in each of the anode compartments 5a, a mixed-phase flow of electrolyte and hydrogen gas arose in the cathode outlet-side hose 10Oco and a mixed-phase flow of electrolyte and oxygen gas arose in the anode outlet-side hose 10Oao.

The overall structure of the alkaline water electrolysis system in Example D1 was as illustrated in FIG. 1.

A KCA2F7-15-2500CL produced by Sansha Electric Manufacturing Co., Ltd. was used as a rectifier.

A GPR-2500 produced by Advanced Instruments, Inc. was used as an oxygen concentration meter.

An SD-D58 AC produced by Riken Keiki Co., Ltd. was used as a hydrogen concentration meter.

A vortex cooler (not illustrated) was installed at an upstream side of each of the oxygen concentration meter and the hydrogen concentration meter with the aim of mist removal.

An EJA-118W produced by Yokogawa Electric Corporation was used as a pressure gauge.

The alkaline water electrolysis system was prepared using components that are typically used in the relevant technical field for the feed pump and gas-liquid separation tanks.

A PRO-0100 (pure water production device) produced by Organo Corporation was used as a water supplier.

A circular tube vessel made of SUS and having an internal diameter of 400 mm and a height of 600 mm was used as a water sealer. An overflow nozzle was attached to the circular tube vessel such that the water sealing height was 450 mm. Piping for introducing gas and piping for discharging gas were connected to an upper lid of the circular tube vessel. The piping for introducing gas was extended to the water sealed section. A liquid level meter was installed in order that the level of the liquid surface inside the water sealer could be visually checked.

A crimped ribbon-type flame arrester (FAR-150 produced by Kaneko Sangyo Co., Ltd.) was used as a flame arrester.

A circular tube vessel made of SUS and having an internal diameter of 600 mm and a height of 600 mm was used as a buffer tank.

Hydrogen and oxygen separated through the gas-liquid separation tanks were each released toward the water sealer via the piping connected to the upper lid of the previously described circular tube vessel.

Gas that had exited the water sealer was passed through the flame arrester and then discharged out of the system.

Water was supplied to the water sealer from the water replenisher and water that overflowed was held in the buffer tank. Water was supplied to the electrolyzer as electrolyte from the buffer tank using a water supply pump.

The amount of water supplied to an electrolyte circulation line from the buffer tank was controlled based on the level of the liquid surface in the hydrogen-side gas-liquid separation tank. The supply pump was stopped at a liquid level of 43% and the supply pump was started up at a liquid level of 40%.

The amount of water replenished in the water sealer from the water replenisher was controlled based on the level of the liquid surface in the buffer tank. A replenishment pump was stopped at a liquid level of 60% and the replenishment pump was started up at a liquid level of 50%.

The flame arrester was installed in a horizontal direction at a downstream side of a gas line of the water sealer (line by which gas was discharged out of the system). The flame arrester caused condensation of a mist component accompanying the gas. A portion of the condensed component became water or alkaline water and flowed to a downstream side of the gas line. A line was provided for causing the condensed water and gas to diverge and for returning the condensed water to the water sealer. The condensed water return line had a liquid retaining section partway along and was configured such that condensed water flowing along the condensed water return line overflowed and returned to the water sealer, whereas the flow of gas was blocked.

An alkaline water electrolysis method using the alkaline water electrolysis system was implemented under the conditions described below.

30% KOH aqueous solution was used as an electrolyte.

Current was passed through the bipolar electrolyzer from the rectifier such that the current density was 10 kA/m$^2$ relative to the area of cathodes and anodes in the bipolar electrolyzer.

The feed pump was used to perform anode compartment-oxygen separation tank (gas-liquid separation tank for anodes)-anode compartment 1a circulation and to perform cathode compartment-hydrogen separation tank (gas-liquid separation tank for cathodes)-cathode compartment circulation.

The pressure inside the electrolyzer after starting to pass current was measured using a pressure gauge and was adjusted such that the cathode-side (hydrogen gas-side) pressure was 50 kPa and the anode-side (oxygen gas-side) pressure was 49 kPa. This pressure adjustment was performed using a control valve 80 installed downstream of the pressure gauge.

In the circulation passages, 20A piping of SGP (carbon steel pipe for piping) subjected to inner surface Teflon lining was used for portions in contact with electrolyte.

The same tanks as used in Example A2 were prepared as gas-liquid separation tanks.

The volume of liquid in each gas-liquid separation tank was about 45% of the design capacity.

(Electrolysis test 1)

Water electrolysis was performed by continuously passing current through the electrolyzer from the rectifier such that the current density was 10 kA/m$^2$. Operation was performed for 1,000 hours. The circulating electrolyte concentration, the hydrogen separation tank liquid level, the hydrogen-side water sealer liquid level, the oxygen-side water sealer liquid level, and the differential pressure of the hydrogen-side/oxygen-side water sealer liquid level were measured at the start time, after 500 hours, and after 950 hours. The results are shown in Table 4.

(Electrolysis test 2)

An electrolysis test was performed for electrolysis systems of Examples D and Comparative Examples D in the same way as the electrolysis test in Examples A and Examples B. The results are shown in Table 4.

Table 4

| | Electrolyte concentration (%) | Hydrogen tank liquid level (%) | Differential pressure in electrolysis system (kPa) | Hydrogen-side water sealer liquid level (mm) | Oxygen-side water sealer liquid level (mm) |
|---|---|---|---|---|---|
| Start time | 30 | 45 | 1 | 450 | 450 |
| After 500 hrs | 31.2 | 42 | 1 | 450 | 450 |
| After 950 hrs | 30.8 | 43 | 1 | 450 | 450 |

It was possible to stabilize both the electrolyte concentration and the liquid level, and to manage the amount of water in the system while supplying water consumed by electrolysis and without releasing wastewater/waste alkali. Moreover, it was possible to stabilize the differential pressure of the oxygen-side/hydrogen-side water sealer liquid level, prevent gas line blocking due to condensed water of the flame arrester, for example, and maintain the hydrogen-side/oxygen-side water sealer liquid level.

The oxygen concentration in hydrogen was constantly measured and, as a result, it was confirmed that an oxygen concentration of 0.05% or less was maintained.

(Example D2)

A flame arrester was installed in a vertical direction at a downstream side of a gas line of the water sealer (line for discharging gas out of the system) such that gas flowed from bottom to top. A condensed water return line was not provided because condensed water that accumulated inside the flame arrester accumulated and returned out downward of upstream of the gas line.

With the exception of the above, water electrolysis was performed in the same way as in Example D1.

Evaluation was performed by electrolysis test 1 and electrolysis test 2 in the same way as in Example D1. The results are shown in Table 5.

Table 5

| | Electrolyte concentration (%) | Hydrogen tank liquid level (%) | Differential pressure in electrolysis system (kPa) | Hydrogen-side water sealer liquid level (mm) | Oxygen-side water sealer liquid level (mm) |
|---|---|---|---|---|---|
| Start time | 30 | 45 | 1 | 450 | 450 |
| After 500 hrs | 31.2 | 42 | 1 | 450 | 450 |

(continued)

| | Electrolyte concentration (%) | Hydrogen tank liquid level (%) | Differential pressure in electrolysis system (kPa) | Hydrogen-side water sealer liquid level (mm) | Oxygen-side water sealer liquid level (mm) |
|---|---|---|---|---|---|
| After 950 hrs | 30.8 | 43 | 1 | 250 | 450 |

As a result, it was possible to stabilize both the electrolyte concentration and the liquid level, and to manage the amount of water in the system while supplying water consumed by electrolysis and without releasing wastewater/waste alkali in the same way as in Example D1. Moreover, it was possible to maintain a differential pressure of the oxygen-side/hydrogen-side water sealer liquid level at 1 kPa. On the other hand, with regards to the hydrogen-side water sealer liquid level, after 500 hours to 950 hours (after approximately 800 hours), hydrogen-side gas piping blocking due to condensed water occurred, and the hydrogen-side water sealer liquid level dropped to 250 mm.

The oxygen concentration in hydrogen was constantly measured and, as a result, it was confirmed that an oxygen concentration of 0.05% or less was maintained.

(Example D3)

Operation was carried out in the same way as in Example D2 with the exception that during operation, the pressure control valve 80 between the hydrogen-side gas-liquid separation tank and the hydrogen-side water sealer and the pressure control valve 80 between the oxygen-side gas-liquid separation tank and the oxygen-side water sealer were both fully opened and pressure adjustment was not performed. The results are shown in Table 6.

Table 6

| | Electrolyte concentration (%) | Hydrogen tank liquid level (%) | Differential pressure in electrolysis system (kPa) | Hydrogen-side water sealer liquid level (mm) | Oxygen-side water sealer liquid level (mm) |
|---|---|---|---|---|---|
| Start time | 30 | 45 | 0 | 450 | 450 |
| After 500 hrs | 31.2 | 42 | 0 | 450 | 450 |
| After 950 hrs | 30.8 | 43 | 2 | 250 | 450 |

As a result, it was possible to stabilize both the electrolyte concentration and the liquid level, and to manage the amount of water in the system while supplying water consumed by electrolysis and without releasing wastewater/waste alkali in the same way as in Examples D1 and D2. On the other hand, with regards to the hydrogen-side liquid level and the differential pressure inside the electrolysis system, hydrogen-side gas piping blocking due to condensed water occurred and the hydrogen-side water sealer liquid level dropped to 250 mm after 500 hours to 900 hours (after approximately 800 hours), whereas the differential pressure in the system was 0 kPa at the start of electrolysis but the hydrogen-side pressure had increased by 2 kPa after 950 hours.

The oxygen concentration in hydrogen was constantly measured and, as a result, it was confirmed that an oxygen concentration of 0.05% or less was maintained.

INDUSTRIAL APPLICABILITY

According to the present disclosure, it is possible to significantly improve gas-liquid separation performance in a gas-liquid separation tank of an alkaline water electrolysis system.

REFERENCE SIGNS LIST

1 partition wall

2 electrode
2a anode
2c cathode
2e conductive elastic body
2r current collector
3 outer frame
4 membrane
5 electrode compartment
5a anode compartment
5c cathode compartment
5i electrolyte inlet
5o electrolyte outlet
5ai anode electrolyte inlet
5ao anode electrolyte outlet
5ci cathode electrolyte inlet
5co cathode electrolyte outlet
6 distributor (ribs)
6a anode distributor (anode ribs)
6c cathode distributor (cathode ribs)
7 gasket
10 header
10ai anode inlet header
10ao anode outlet header
10ci cathode inlet header
lOco cathode outlet header
101 internal header
10Iai anode inlet header
10Iao anode outlet header
10Ici cathode inlet header
10Ico cathode outlet header
10O external header
10Oai anode inlet header (anode inlet-side hose)
10Oao anode outlet header (anode outlet-side hose)
10Oci cathode inlet header (cathode inlet-side hose)
10Oco cathode outlet header (cathode outlet-side hose)
20 conduit
20ai anode distribution pipe
20ao anode collection pipe
20ci cathode distribution pipe
20co cathode collection pipe
20Iai anode distribution pipe
20Iao anode collection pipe
20Ici cathode distribution pipe
20Ico cathode collection pipe
20Oai anode distribution pipe
20Oao anode collection pipe
20Oci cathode distribution pipe
200co cathode collection pipe
50 electrolyzer
51g fast head, loose head
51i insulating plate
51a anode terminal element
51c cathode terminal element
51r tie rod
60 bipolar element
65 electrolytic cell
70 alkaline water electrolysis system
71 feed pump

72 gas-liquid separation tank
72h hydrogen separation tank
72o oxygen separation tank
72i inflow port
72e outflow port
72s electrolyte liquid surface
72in piping attached to inflow port
73 water replenisher
74 rectifier
75 oxygen concentration meter
76 hydrogen concentration meter
77 flow meter
78 pressure gauge
79 heat exchanger
80 pressure control valve
81 electrolyte returning piping
81a anode electrolyte returning piping
81c cathode electrolyte returning piping
82 electrolyte feeding piping
82a anode electrolyte feeding piping
82c cathode electrolyte feeding piping
90 confluence pipe
A point indicating axis
D1 given direction along partition wall (electrolyte passing direction)
H height of gas-liquid separation tank
Z zero-gap structure

**Claims**

1.  A water electrolysis system comprising at least an electrolyzer and a gas-liquid separation tank, wherein
    an inflow port by which a mixture of gas and electrolyte flows into the gas-liquid separation tank from the electrolyzer
    is disposed at a higher position than a liquid surface of electrolyte in the gas-liquid separation tank.

2.  An alkaline water electrolysis system comprising at least an electrolyzer and a gas-liquid separation tank, wherein
    an inflow port by which a mixture of gas and electrolyte flows into the gas-liquid separation tank from the electrolyzer
    is disposed at a higher position than a liquid surface of electrolyte in the gas-liquid separation tank.

3.  The water electrolysis system according to claim 1 or 2, wherein piping attached to the inflow port is disposed along
    an inner wall of the gas-liquid separation tank.

4.  The water electrolysis system according to any one of claims 1 to 3, wherein the electrolyzer and a header that is
    a pipe that distributes or collects electrolyte are separate, and the header is disposed at a lower part and/or upper
    part inside a partition wall of the electrolyzer and/or outside an outer frame of the electrolyzer, and is disposed such
    as to extend in a direction perpendicular to the partition wall.

5.  The water electrolysis system according to any one of claims 1 to 4, wherein the electrolyzer and a header that is
    a pipe that distributes or collects electrolyte are unified, and the header is disposed at a lower part and/or upper
    part inside a partition wall of the electrolyzer and/or inside an outer frame of the electrolyzer, and is disposed such
    as to extend in a direction perpendicular to the partition wall.

6.  The water electrolysis system according to any one of claims 1 to 5, wherein
    a resin lining layer is included at an inner surface of the gas-liquid separation tank, and
    the resin lining layer has a thickness of 0.5 mm to 4.0 mm.

7.  The water electrolysis system according to claim 6, wherein standard deviation of the thickness of the resin lining
    layer is 1.0 mm or less.

8. The water electrolysis system according to claim 6 or 7, wherein the resin lining layer is a fluororesin.

9. The water electrolysis system according to claim 8, wherein the fluororesin is at least one selected from the group consisting of polytetrafluoroethylene (PTFE), tetrafluoroethylene-perfluoroalkyl vinyl ether copolymer (PFA), tetrafluoroethylene-hexafluoropropylene copolymer (FEP), and tetrafluoroethylene-ethylene copolymer (ETFE).

10. The water electrolysis system according to any one of claims 6 to 9, wherein the resin lining layer is two or more layers.

11. The water electrolysis system according to any one of claims 1 to 10, wherein an outer surface of the gas-liquid separation tank is covered by a heat insulating material.

12. The water electrolysis system according to any one of claims 1 to 10, further comprising a confluence pipe connected to a hydrogen separation tank that separates electrolyte and hydrogen gas and an oxygen separation tank that separates electrolyte and oxygen gas.

13. A water electrolysis method comprising using the water electrolysis system according to any one of claims 1 to 12 at a current density of 8 kA/$m^2$ or more under a power supply for which current density varies over time and at an electrolysis temperature of 80°C or higher.

14. A hydrogen production method for producing hydrogen through water electrolysis of water containing an alkali using a system including an electrolyzer, comprising causing a mixture of gas and electrolyte to flow into a gas-liquid separation tank from the electrolyzer at a higher position than a liquid surface of electrolyte in the gas-liquid separation tank.

15. The water electrolysis system according to claim 1, wherein
when h (units: m) is taken to be vertical direction distance between the liquid surface of electrolyte in the gas-liquid separation tank and a highest vertical direction position of electrolyte returning piping that feeds electrolyte from the electrolyzer to the gas-liquid separation tank, and
when H (units: m) is taken to be vertical direction distance between a lowest vertical direction position of an electrolyte distribution pipe inlet of the electrolyzer and the liquid surface of electrolyte in the gas-liquid separation tank, a relationship shown below is satisfied,

$$0.01 \times H \leq h \leq 0.5 \times H$$

the highest vertical direction position of the electrolyte returning piping is further vertically upward than the liquid surface of electrolyte in the gas-liquid separation tank, and the lowest vertical direction position of the electrolyte distribution pipe inlet is further vertically downward than the liquid surface of electrolyte in the gas-liquid separation tank.

16. The water electrolysis system according to claim 15, wherein the bipolar electrolyzer and the gas-liquid separation tank are disposed separately from one another.

17. The water electrolysis system according to claim 15 or 16, wherein
the gas-liquid separation tank includes an oxygen separation tank and a hydrogen separation tank, and
when ha is taken to be vertical direction distance between a liquid surface of electrolyte in the oxygen separation tank and a highest vertical direction position of anode electrolyte returning piping that feeds electrolyte from the electrolyzer to the oxygen separation tank, and
when hc is taken to be vertical direction distance between a liquid surface of electrolyte in the hydrogen separation tank and a highest vertical direction position of cathode electrolyte returning piping that feeds electrolyte from the electrolyzer to the hydrogen separation tank, a relationship shown below is satisfied,
ha ≤ hc.

18. The water electrolysis system according to any one of claims 15 to 17, wherein
the gas-liquid separation tank includes an oxygen separation tank and a hydrogen separation tank, and
electrolyte discharged from the oxygen separation tank and electrolyte discharged from the hydrogen separation tank are mixed and fed to the electrolyzer.

**19.** The water electrolysis system according to any one of claims 15 to 18, further comprising a power supply for which current density varies over time.

**20.** The water electrolysis system according to any one of claims 15 to 19, wherein the electrolyzer and a header that is a pipe that distributes electrolyte to or collects electrolyte from the electrolyzer are unified, and the header is disposed at a lower part inside a partition wall of the electrolyzer and/or inside an outer frame of the electrolyzer, and is disposed such as to extend in a direction perpendicular to the partition wall.

**21.** The water electrolysis system according to any one of claims 15 to 20, wherein
the electrolyzer includes an anode compartment and a cathode compartment, and
a membrane separating the anode compartment and the cathode compartment is a polysulfone membrane.

**22.** The water electrolysis system according to claim 1, further comprising at least a water sealer and a water replenisher, wherein
the water sealer is connected downstream of the gas-liquid separation tank and upstream of the water replenisher.

**23.** The water electrolysis system according to claim 22, further comprising a mechanism that adjusts an amount of water in the water electrolysis system as a whole.

**24.** The water electrolysis system according to claim 22 or 23, wherein
the gas-liquid separation tank includes an oxygen separation tank and a hydrogen separation tank, and
the water electrolysis system further comprises a confluence pipe connected to the oxygen separation tank and the hydrogen separation tank.

**25.** The water electrolysis system according to any one of claims 22 to 24, wherein the water sealer is connected downstream of an oxygen separation tank and/or downstream of a hydrogen separation tank.

**26.** The water electrolysis system according to any one of claims 22 to 25, further comprising a buffer tank connected downstream of the water sealer.

**27.** The water electrolysis system according to any one of claims 22 to 26, further comprising piping that is connected downstream of the water sealer and that externally discharges hydrogen gas and/or oxygen gas, wherein
a flame arrester is included in the piping.

**28.** The water electrolysis system according to any one of claims 22 to 27, further comprising, in the piping, a mechanism for returning mist-condensation liquid of the flame arrester to the water sealer.

**29.** The water electrolysis system according to claim 27 or 28, wherein the flame arrester is disposed with a gas passing direction thereof oriented in a horizontal direction or a downward vertical direction.

**30.** A water electrolysis method using the water electrolysis system according to any one of claims 22 to 29, comprising supplying water from the water replenisher via the water sealer.

**31.** The water electrolysis method according to claim 30, wherein electrolyte discharged from the oxygen separation tank and electrolyte discharged from the hydrogen separation tank are mixed in the confluence pipe and are introduced into the electrolyzer.

**32.** The water electrolysis method according to claim 30 or 31, wherein water discharged from the water sealer is supplied to the electrolyzer via the buffer tank.

**33.** The water electrolysis method according to any one of claims 30 to 32, wherein mist that condenses in the flame arrester is returned to the water sealer.

**34.** The water electrolysis system according to claim 1, comprising at least an electrolyzer, a gas-liquid separation tank, and a water replenisher, wherein
the water electrolysis system further comprises piping that externally discharges hydrogen gas and/or oxygen gas, and
a flame arrester is included in the piping.

# FIG. 1

# FIG. 2

# FIG. 3A

# FIG. 3B

# FIG. 4

# FIG. 5

# FIG. 6

# FIG. 7

# FIG. 8

FIG. 9

EP 3 604 620 A1

## INTERNATIONAL SEARCH REPORT

| International application No. |
|---|
| PCT/JP2018/013955 |

### A. CLASSIFICATION OF SUBJECT MATTER

Int.Cl.  C25B15/08(2006.01)i, C25B1/08(2006.01)i, C25B9/00(2006.01)i,
C25B15/02(2006.01)i

According to International Patent Classification (IPC) or to both national classification and IPC

### B. FIELDS SEARCHED

Minimum documentation searched (classification system followed by classification symbols)
Int.Cl.  C25B15/08, C25B1/08, C25B9/00, C25B15/02

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-285368 A (MITSUBISHI HEAVY INDUSTRIES, LTD.) 03 October 2002, claims, paragraphs [0037]-[0038], fig. 2-3 (Family: none) | 1-3, 14-17<br>4-13, 18-21 |
| X<br>Y | JP 55-113888 A (TOKUYAMA SODA CO., LTD.) 02 September 1980, page 3, upper right column, lines 7-20, fig. 1 (Family: none) | 1-2, 4, 14-17<br>4-13, 19-21 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 June 2018 (11.06.2018) | 26 June 2018 (26.06.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2018/013955

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y | JP 63-250481 A (HITACHI, LTD.) 18 October 1988, claims, page 1, lower right column, lines 16-19, page 3, upper left column, line 2 to page 4, lower left column, line 2, fig. 1, 4 (Family: none) | 1-2, 12, 14-17, 22-26, 30-32<br>12-13, 18-21, 27-29, 33 |
| X<br>Y | Microfilm of the specification and drawings annexed to the request of Japanese Utility Model Application No. 189608/1982 (Laid-open No. 93703/1984)(MITSUBISHI HEAVY INDUSTRIES, LTD.) 26 June 1984, page 1, line 12 to page 4, line 17, fig. 1-2 (Family: none) | 1-2, 14-17, 34<br>1921, 27-29, 33 |
| Y | JP 8-260178 A (RESEARCH INSTITUTE OF INNOVATIVE TECHNOLOGY FOR THE EARTH) 08 October 1996, fig. 2, 7 (Family: none) | 5-13 |
| Y | JP 59-185789 A (HODOGAYA CHEMICAL CO., LTD.) 22 October 1984, page 4, lower left column, lines 5-8 (Family: none) | 6-13 |
| Y | JP 2005-240661 A (MITSUBISHI HEAVY INDUSTRIES, LTD.) 08 September 2005, paragraph [0028] (Family: none) | 11-13 |
| Y | JP 2005-330515 A (MITSUBISHI HEAVY INDUSTRIES, LTD.) 02 December 2005, claims, paragraph [0061] (Family: none) | 13, 19-21 |
| Y | JP 2016-94646 A (ASAHI KASEI CORPORATION) 26 May 2016, paragraph [0029] (Family: none) | 21 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013028822 A

- JP 2014223590 A